# EUROPÄISCHE PATENTSCHRIFT

(11) **EP 3 995 868 B1**
(45) Veröffentlichungstag und Bekanntmachung des Hinweises auf die Patenterteilung: **10.09.2025**
(21) Anmeldenummer: 20205735.2
(22) Anmeldetag: 04.11.2020
(51) Int. Cl.: G02B 5/122, B29C 33/42, B60Q 1/30, G02B 5/124, F21S 41/33, B29C 45/26, B29C 33/38, B29L 11/00, F21S 43/31

(54) **RÜCKSTRAHLER MIT APERIODISCHER PARKETTIERUNG**
REFLEX REFLECTOR WITH APERIODIC TESSELLATION
RÉTRORÉFLECTEUR À PARQUETAGE APÉRIODIQUE

(43) Veröffentlichungstag der Anmeldung: 11.05.2022
(73) Patentinhaber: odelo GmbH, 70329 Stuttgart (DE)
(72) Erfinder: HORNUNG, Thorsten, 73760 Ostfildern (DE)
(74) Vertreter: Benninger, Johannes

(56) Entgegenhaltungen:
- EP-A1- 2 988 061
- DE-A1- 2 544 356
- JP-A- 2002 243 923
- US-A1- 2001 036 533
- ANONYMOUS: "Penrose tiling - Wikipedia", 5 October 2020 (2020-10-05), XP055786470, Retrieved from the Internet <URL:https://en.wikipedia.org/w/index.php?title=Penrose_tiling&oldid=982024391> [retrieved on 20210316]
- FANG FANG ET AL: "Methods for Calculating Empires in Quasicrystals", CRYSTALS, vol. 7, no. 10, 9 October 2017 (2017-10-09), pages 304, XP055786484, DOI: 10.3390/cryst7100304
- LE LANH-THANH ET AL: "Design of a Society of Automotive Engineers Regular Curved Retroreflector for Enhancing Optical Efficiency and Working Area", CRYSTALS, vol. 8, no. 12, 30 November 2018 (2018-11-30), pages 450, XP055786609, DOI: 10.3390/cryst8120450

## Beschreibung

Die Erfindung betrifft einen Rückstrahler gemäß dem Oberbegriff des Anspruchs 1.

Insbesondere beschäftigt sich die Erfindung mit der Verbesserung eines Rückstrahlers, wie er beispielsweise in einer Heckleuchte für ein Kraftfahrzeug zur Anwendung kommt.

Rückstrahler weisen analog zu einer Leuchtfläche zur Verwirklichung einer Lichtfunktion beispielsweise einer Fahrzeugleuchte eine Rückstrahlfläche auf, innerhalb der eine auf diese eintreffendes Licht zurückwerfende Rückstrahlfunktion verwirklicht ist. Innerhalb ihrer Rückstrahlfläche weisen Rückstrahler hierzu Rückstrahlprismen auf.

Im vorliegenden Dokument kurz als Rückstrahler bezeichnete optische Rückstrahler bestehen bevorzugt aus transparentem Material. Die dem einfallenden Licht zugewandte Vorderseite ist eine stetig differenzierbare Fläche, deren Krümmung im Vergleich zur Größe der rückseitigen Strukturen gering ist. Die Rückseite des Rückstrahlers ist gekennzeichnet durch die bereits erwähnten Rückstrahlprismen, die jeweils drei senkrecht oder nahezu senkrecht aufeinander stehende Prismaflächen aufweisen.

Um auf der Rückseite des Rückstrahlers die Rückstrahlfläche lückenlos mit den Rückstrahlprismen zu füllen, werden diese typischerweise in einem regelmäßigen Raster angeordnet, beispielsweise in einem hexagonalen Raster.

Die Prismaflächen stehen üblicherweise nicht genau senkrecht aufeinander, weil eine Rückstrahlung in eine Richtung gewünscht wird, die wenige zehntel Grad von der Richtung des einfallenden Lichts abweicht. Im üblichen Aufbau sind diese Rückstrahlprismen würfeleckenförmig. Sie können jedoch auch in anderer Form zugeschnitten sein.

Durch die drei senkrecht aufeinander stehenden Prismaflächen zeigen die Rückstrahlprismen eine optische Rückstrahlcharakteristik, die ebenfalls eine dreizählige Symmetrie aufweist. Diese dreizählige Symmetrie führt dazu, dass die Effizienz der Rückstrahlung wenigstens rechts-links oder oben-unten asymmetrisch ist.

Herkömmliche Rückstrahler werden daher meist in mindestens zwei Teilbereiche aufgeteilt, in denen die Rückstrahlprismen spiegelsymmetrisch ausgerichtet sind. Durch die Kombination dieser mindestens zwei Bereiche ergibt sich insgesamt eine Rückstrahlcharakteristik mit sechszähliger Symmetrie. Der Rückstrahler kann dadurch eine rechts-links und oben-unten symmetrische Rückstrahlwirkung zeigen.

Zudem sind Rückstrahler bekannt, bei denen die Kontur der Rückstrahlprismen die Form gleichseitiger Dreiecke besitzt. Damit kann mit der Kombination aus einem Rückstrahlprisma und einem dazu spiegelsymmetrischen Rückstrahlprisma die Fläche in einem hexagonalen Raster gefüllt werden. Der resultierende Rückstrahler besitzt eine Rückstrahlcharakteristik mit sechszähliger Symmetrie und kann dadurch gleichzeitig eine rechts-links und oben-unten symmetrische Rückstrahlwirkung zeigen.

Die Rückstrahlprismen sind mit zu ihnen spiegelsymmetrisch ausgerichteten Rückstrahlprismen in einem regelmäßigen Raster angeordnet. Weil der Rückstrahler hierdurch aus vielen gleich orientierten Rückstrahlprismen besteht, entstehen unter bestimmten Lichteinfallswinkeln starke, gerichtete Reflexionen durch Licht, dass nur an zwei der drei Seiten eines jeden Rückstrahlprismas reflektiert wird und entsprechend nicht Richtung Lichtquelle zurückgeworfen wird. Dies hat eine starke Richtungsabhängigkeit bezüglich des von den in einem regelmäßigen Raster angeordneten Rückstrahlprismen zurückgeworfenen Lichts zur Folge. Ferner neigen sie bei Sonneneinstrahlung zu Lichtreflexionen, die dadurch, dass die Lichtreflexionen alle die selbe Richtung betreffen, als störend empfunden werden. Im Straßenverkehr können dadurch beispielsweise von Sonnenlicht verursachte Reflexionen zu Irritationen oder Blendung führen und stellen daher ein Sicherheitsrisiko dar.

Darüber hinaus tritt das Erscheinungsbild eines regelmäßigen Rasters unerwünscht in den Vordergrund.

Auch komplexere Lösungen sind stets mit einer Anordnung der Prismen in einem regelmäßigen Raster ausgeführt. Ebenso Anpassungen für Rückstrahler mit gekrümmter Vorderseite, beispielsweise in Lichtscheiben von Heckleuchten integrierte Rückstrahler. Das Grundprinzip einer Anordnung der Prismen in einem regelmäßigen Raster bleibt auch dabei erhalten.

Optisch ansprechendere Rückstrahler werden hergestellt, indem die einzelnen Rückstrahlprismen anders zugeschnitten werden.

Um eine flächenfüllende Parkettierung zu ermöglichen, wird dabei weiterhin die hexagonale Anordnung beibehalten. Bei entsprechendem Zuschnitt ist auch ein quadratisches Raster möglich.

Eine Anpassung der Rückstrahlfläche eines bisher verwendeten Rückstrahlers an eine beispielsweise durch eine Formgebung einer Fahrzeugleuchte vorgegebene, stete Teilfläche beispielsweise deren Lichtscheibe ist dadurch erschwert, dass die Ränder der in einer Draufsicht hexagonalen Rückstrahlprismen aufgrund der auch zum Rand hin rechtwinklig aufeinander stehenden, beispielsweise viereckigen Prismaflächen nicht in einer Ebene liegen. Mit anderen Worten liegen die Kanten der Rückstrahlprismen nicht in einer Fläche. Demnach ist immer eine Anpassung zumindest der Prismaflächen entlang der Ränder erforderlich, um einen bisher verwendeten Rückstrahler in eine stete Fläche einzufügen.

Darüber hinaus kann vom vorgegebenen, periodischen Raster, wie beispielsweise einem in einer Draufsicht hexagonalen Raster mit beispielsweise hexagonalen Rückstrahlprismen, nicht oder nur erschwert abgewichen werden, weil Abweichungen vom periodischen Raster nicht zusammenpassende Eckbereiche erzeugen würden.

Solche nicht zusammenpassende Eckbereiche sind beispielsweise Lücken zwischen benachbarten Rückstrahlprismen, die durch Auseinanderklaffungen aufgrund einer vom periodischen Raster abweichenden Verzerrung entstehen würden. Entsprechendes würde für eine Stauchung in Abweichung vom periodischen Raster gelten, einhergehend mit Unstetigkeiten, wie etwa Sprüngen, zwischen benachbarten Prismenflächen verschiedener benachbarter, zur Anpassung an die Stauchung zurechtgeschnittener Rückstrahlprismen.

Durch DE 10 2016 001 543 A1 ist ein Rückstrahler aus transparentem Material bekannt, dessen Rückstrahlprismen jeweils mindestens drei einen Tripelspiegel bildende Prismaflächen aufweisen, welche ein Würfeleckenreflexelement bilden. Die Prismaflächen des Tripelspiegels des Würfeleckenreflexelements sind zueinander unter einem Winkel von 90° angeordnet. Die Prismaflächen des Tripelspiegels des Würfeleckenreflexelements reflektieren einfallende Lichtstrahlen durch Totalreflexion. Auf den Rückstrahler sowie auf dessen Tripelspiegel und deren Würfeleckenreflexelemente auftreffende Lichtstrahlen werden in einem Brennpunkten erhöhter Lichtintensität gebündelt.

Durch DE 1 913 166 ist ein Rückstrahler mit rückseitig angeordneten Rückstrahlprismen mit senkrecht zueinander angeordneten Prismaflächen bekannt. Vorderseitig weist der Rückstrahler kleine Unebenheiten auf, um Licht in einer bevorzugten Richtung, die einen kleinen Winkel mit der Einfallsrichtung einschließt, nach oben zurückzustrahlen.

Durch EP 2 988 061 A1 ist ein Reflektor bekannt. Bei diesem sind vier Arten von Parametrisierungen vorgesehen, welche die räumliche Verteilungen der Facetten oder jeder anderen Mikrostruktur in der Oberfläche des Reflektors festlegen, um Fluchtlinien zwischen Mikrostrukturen und oberflächlichen Vorzugsausrichtungen zu vermeiden oder zu verringern, wodurch unerwünschte Schattierungen der eigenen Struktur vermieden werden. Hierzu sind komplexe Oberflächen mit weichen Übergängen zwischen benachbarten Mikrostrukturen vorgesehen, die frei von Kanten sind. Hierdurch können zur kontrollierten Streuung reflektierten Lichts Mehrfachreflektionen mit guter Wirksamkeit vermieden werden. Dadurch lässt sich verhindern, dass das Licht mehr als einmal an den Mikrostrukturen reflektiert wird.

Durch JP 2002-243923 A ist ein Rückstrahler bekannt, dessen ebene Rückstrahlfläche mehrere aus der Ebene hervor- und zurückspringende Rückstrahlprismen mit verschiedenen Geometrien ihrer Prismaflächen umfasst, die gemäß einer Penrose-Parkettierung angeordnet sind.

Durch DE 25 44 356 A1 ist ein Rückstrahler mit mindestens einer Rückstrahlfläche bekannt. Die Rückstrahlfläche umfasst mehrere Rückstrahlprismen, die jeweils aus mehreren aneinander angrenzenden Prismaflächen zusammengesetzt sind. Mehrere Rückstrahlprismen mit verschiedenen Geometrien ihrer Prismaflächen sind zu Rückstrahlkacheln zusammengesetzt. Die Rückstrahlkacheln ermöglichen eine Parkettierung der Rückstrahlfläche. Die Rückstrahlkacheln weisen jeweils einen Rand auf, der innerhalb einer gemeinsamen, stetigen Fläche liegt.

Eine Aufgabe der Erfindung ist es, einen Rückstrahler mit rotationssymmetrischer Rückstrahlcharakteristik zu entwickeln, also bei dem die Rückstrahlwirkung bei schräg einfallendem Licht unabhängig davon ist, wie der Rückstrahler gegenüber seiner Hauptachse gedreht ist, und bei dem störende, nicht rückstrahlende Lichtreflexionen verringert sind.

Zudem ist es eine Aufgabe der Erfindung, dass die eine Vielzahl von Rückstrahlprismen umfassende Rückstrahlfläche eine optische Anmutung aufweist, die als deutlich weniger regelmäßig wahrgenommen wird als ein hexagonales Muster und insgesamt ein ansprechenderes Erscheinungsbild erzeugt.

Ferner ist es eine Aufgabe der Erfindung, einen Rückstrahler mit einer lückenlosen Anordnung von Rückstrahlprismen innerhalb einer beliebig geformten Rückstrahlfläche auf dessen Rückseite zu schaffen, die frei von einer Anpassung zumindest der Prismaflächen entlang der Ränder ist, um den Rückstrahler in eine stete Fläche einzufügen.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Der Gegenstand der Erfindung betrifft demnach einen Rückstrahler mit mindestens einer Rückstrahlfläche. Die Rückstrahlfläche umfasst mehrere Rückstrahlprismen, die jeweils aus mindestens einer, bevorzugt jedoch aus mehreren aneinander angrenzenden Prismaflächen zusammengesetzt sind. Mehrere Rückstrahlprismen, vorzugsweise zumindest zwei mit verschiedenen Geometrien ihrer Prismaflächen, sind zu Rückstrahlkacheln zusammengesetzt, die in Verbindung mit identischen Rückstrahlkacheln oder mit weiteren Rückstrahlkacheln mit abweichenden Geometrien der weiteren Prismaflächen ihrer weiteren Rückstrahlprismen eine lückenlose Parkettierung der Rückstrahlfläche ergeben. Die Rückstrahlkacheln weisen jeweils einen Rand auf, der innerhalb einer gemeinsamen, stetigen Fläche liegt, entlang welcher sich die Rückstrahlfläche erstreckt.

Die Erfindung schlägt demnach vor, Rückstrahlprismen so zuzuschneiden, dass ihre Außenkonturen einzeln oder bevorzugt zu mehreren zusammengefasst im vorliegenden Dokument Rückstrahlkacheln oder kurz Kacheln bezeichnete Formen aufweisen, mit denen eine lückenlose, aperiodische Parkettierung möglich ist.

Aus der Mathematik sind Parkettierungen ebener Flächen bekannt. Das bekannteste Beispiel ist die Penrose-Rauten-Parkettierung. Besonders vorteilhaft ist eine Parkettierung mit lokal fünfzähliger Symmetrie, wie etwa die Penrose-Parkettierungen, oder einer höheren ungradzahligen lokalen Symmetrie.

Bevorzugt wird eine aus der Mathematik bekannte Parkettierung herangezogen, um die Rückstrahlfläche zu parkettieren. Hierzu werden die Außenumrisse der einzelnen Elemente einer aus der Mathematik bekannten Parkettierung auf die Rückstrahlprismen und/oder die Rückstrahlkacheln derart übertragen, dass die zueinander in einer vorgegebenen Orientierung stehenden Prismaflächen eines Rückstrahlprismas oder mehrerer, zu einer Rückstrahlkachel zusammengesetzter Rückstrahlprismen in einer Draufsicht den Außenumrissen dieser Elemente entsprechen.

Die Rückstrahlcharakteristik weist durch eine solche Parkettierung beispielsweise eine dreißigfache Symmetrie auf, die in der praktischen Anwendung nicht mehr von einem rotationssymmetrischen Verhalten zu unterscheiden ist. Der Rückstrahler selbst erscheint insgesamt weitgehend unregelmäßig, es entstehen aber durchaus formschöne, scheinbar zufällig eingebaute, beispielsweise sternförmige Strukturen. Da die Rückstrahlprismen in sehr vielen unterschiedlichen Orientierungen vorkommen, treten unerwünschte Reflexionen immer nur an wenigen Rückstrahlprismen gleichzeitig auf und werden daher nicht wie beim Stand der Technik als störend wahrgenommen.

Nicht trivial ist bei der Umsetzung, dass es für ein lückenloses Aneinanderfügen der Kacheln nicht ausreichend ist, wenn die Projektion in eine Ebene senkrecht zur Hauptachse, entsprechend in der gemeinsamen, stetigen Fläche, entlang welcher sich die Rückstrahlfläche erstreckt, die gewünschte Außenkontur ergibt.

Die Kacheln sind deshalb zudem so gestaltet, dass ihre im allgemeinen dreidimensionalen Außenkonturen stetig aneinandergefügt werden können. Werden die Kacheln aus mehreren Rückstrahlprismen zusammengesetzt und wird darüber hinaus berücksichtigt, welche Aneinanderfügungen in der Parkettierung vorkommen können, so kann eine insgesamt stetige Oberfläche sichergestellt werden.

Zusammengefasst erlaubt die Erfindung, eine Fläche lückenlos mit Rückstrahlprismen zu füllen. Die Fläche wird beispielsweise bei einer Penrose-Parkettierung gefüllt durch ein nicht-periodisches Muster mit fünfzähliger Symmetrie.

Sich hierdurch ergebende Vorteile sind zumindest ein ansprechendes, innovatives Erscheinungsbild und ein richtungsunabhängiges, rotationssymmetrisches Rückstrahlverhalten.

Die Parkettierung wird vorteilhaft aus mindestens zwei unterschiedlichen Grundkacheln zusammengesetzt, wobei es jeweils unendlich viele unterschiedliche Parkettierungsmöglichkeiten gibt.

Beispiele für geeignete Kacheln sind:
- schmale und breite Rauten,
- Drachen und Pfeil, sowie
- Stern, Krone, Raute und Fünfecke.

Es ist ersichtlich, dass die Erfindung vorsieht, mehrere Rückstrahlprismen aus Prismaflächen unterschiedlicher Geometrie und Orientierung zu Rückstrahlkacheln zusammenzufassen, welche entweder für sich genommen eine lückenlose Parkettierung einer Rückstrahlfläche zulassen, oder in Kombination mit einer oder mehreren weiteren Rückstrahlkacheln, welche weiteren Rückstrahlkacheln weitere Rückstrahlprismen mit von den Prismaflächen der Rückstrahlprismen abweichender Geometrie und/oder Orientierung umfassen oder aufweisen können, eine lückenlose Parkettierung der Rückstrahlfläche zulassen.

Die Erfindung behebt gleich mehrere beim Stand der Technik vorherrschende und anzutreffende Nachteile auf erfinderische Art und Weise:
Rückstrahler besitzen eine asymmetrische Rückstrahlcharakteristik und erzeugen unter bestimmten Lichtbedingungen starke gerichtete Reflexionen. Die Ursache liegt in der regelmäßigen Anordnung gleichartiger Rückstrahlprismen.

Dieser Nachteil wird beseitigt durch eine nicht-periodische Prismenanordnung, in der die Rückstrahlprismen insbesondere in unterschiedlichen Orientierungen vorkommen.

Um eine hohe Rückstrahleffizienz zu erreichen, ist es weiterhin erforderlich, die Rückstrahlfläche weitgehend flächenfüllend mit Rückstrahlprismen zu belegen.

Dies wird durch eine aperiodische, flächenfüllende Parkettierungen erhalten. Vorteilhaft wird eine bekannte Parkettierung für Rückstrahler zu nutzen. Hierbei werden die aus der Mathematik bekannten Parkettierungen auf die Rückstrahlprismen und - kacheln derart übertragen, dass die Umrisse der verschiedenen Rückstrahlprismen und/oder die Umrisse der aus mehreren Rückstrahlprismen zusammengesetzten Rückstrahlkacheln in einer Draufsicht auf die Rückstrahlfläche die Geometrien innerhalb der aus der Mathematik bekannten Parkettierungen einnehmen. Ein wesentlicher Vorteil ist dabei, dass nur eine kleine Anzahl von Kacheln benötigt wird, was wiederum zu einer kleinen Anzahl unterschiedlicher Rückstrahlprismen führt und damit eine kostengünstige Herstellung ermöglicht. Zudem gibt die Mathematik genaue Konstruktionsvorschriften, mit denen die Parkettierung erzeugt werden kann. Eine komplett freie Konstruktion wäre extrem zeitaufwändig.

Einzelne Rückstrahlprismen zu entsprechenden, mathematisch vorgegebenen Kacheln zurechtzuschneiden führt zu Versatzkanten zwischen den Rückstrahlprismen, weil deren Oberflächen nicht stetig ineinander übergehen. Zudem ergeben sich dadurch auch oft ineffiziente Rückstrahlprismen.

Zur Beseitigung diesen Nachteils sieht die Erfindung daher vorteilhaft vor, eine Rückstrahlkachel jeweils aus mehreren, geeignet zurechtgeschnittenen Rückstrahlprismen zusammenzusetzen.

Damit ist es nicht nur möglich, effizientere Rückstrahlprismen zu verwenden, sondern auch, dass der umlaufende Rand einer jeden Rückstrahlkachel innerhalb einer stetigen Fläche liegt. Hierdurch kann eine Parkettierung aus mehreren Rückstrahlkacheln an jede beliebige stetige Oberfläche angepasst werden, weil es möglich ist, mit jeder Rückstrahlkachel aus mehreren Rückstrahlprismen eine insgesamt stetige Oberfläche zu erzeugen. Wesentlich dafür ist die Erkenntnis, dass nur wenige Zusammenfügungen benachbarter Kacheln berücksichtigt werden müssen.

Vorteile gegenüber dem Stand der Technik sind unter Anderem, dass die Prismaflächen der Rückstrahlprismen innerhalb der Rückstrahlfläche des verschiedene Rückstrahlprismen zu Rückstrahlkacheln zusammenfassenden Rückstrahlers in zahlreichen unterschiedlichen Orientierungen vorkommen, wodurch ungewollte gerichtete Lichtreflexionen, beispielsweise von einfallendem Sonnenlicht, in jeder Betrachtungsrichtung nur an wenigen Rückstrahlprismen gleichzeitig auftreten, so dass diese wesentlich lichtschwächer ausfallen als bei herkömmlichen Rückstrahlern nach dem Stand der Technik.

Eine Vereinfachung im Vergleich mit der Herstellung von Rückstrahlern mit regelmäßigem Raster wird darüber hinaus dadurch erreicht, dass die Ränder der Rückstrahlkacheln innerhalb einer stetigen Fläche, beispielsweise innerhalb einer Ebene liegen.

Bei konventionellen Rückstrahlern ist dies nicht der Fall.

Durch die rotationssymmetrische Rückstrahlcharakteristik ist ferner die Rückstrahlwirkung unabhängig von der Orientierung beim Anbau eines Rückstrahlers an einem Gegenstand oder Fahrzeug.

Außerdem besitzt der Rückstrahler ein ansprechendes, deutlich vom üblichen abweichendes Erscheinungsbild.

Der Rückstrahler kann zusätzlich einzelne oder eine Kombination mehrerer in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:

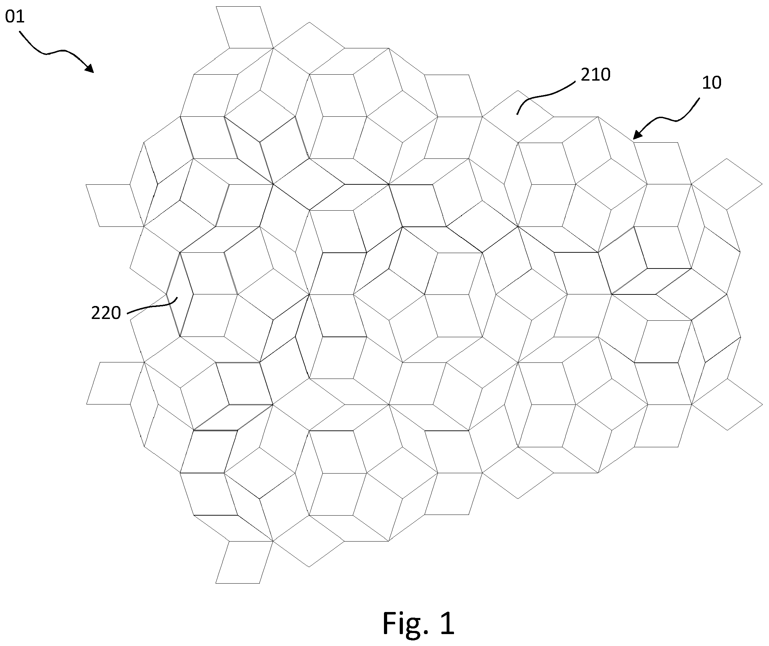

- Fig. 1: einen Ausschnitt eines Ausführungsbeispiels einer mit einer Penrose-Rauten-Parkettierung versehenen Rückstrahlfläche eines Rückstrahlers in einer Draufsicht. Die Parkettierung ist aus einer schmalen und einer breiten Raute als Kacheln zusammengesetzt. Sie besitzt lokal fünfzählige Symmetrie.

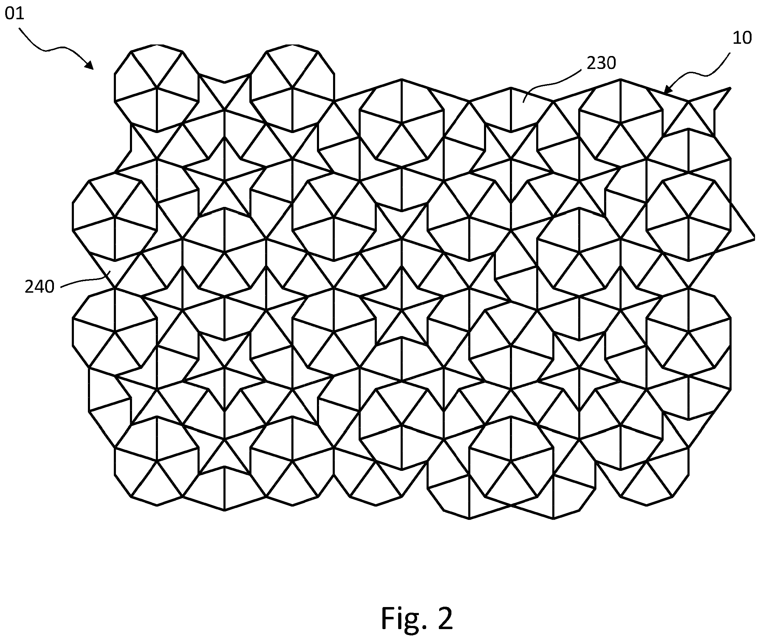

- Fig. 2: einen Ausschnitt eines Ausführungsbeispiels einer mit einer Penrose-Drachen-Pfeil-Parkettierung versehenen Rückstrahlfläche eines Rückstrahlers in einer Draufsicht. Die Parkettierung ist aus einer drachenförmigen und einer pfeilförmigen Kachel zusammengesetzt. Sie besitzt lokal fünfzählige Symmetrie.

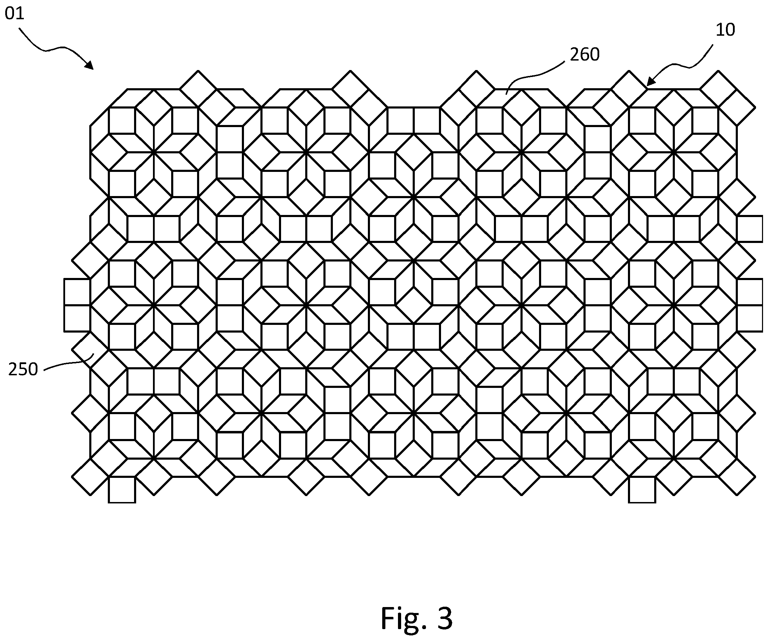

- Fig. 3: einen Ausschnitt eines Ausführungsbeispiels einer mit einer Amman-Beeker-Parkettierung versehenen Rückstrahlfläche eines Rückstrahlers in einer Draufsicht. Die Parkettierung ist aus einer quadratischen und einer rautenförmigen Kachel zusammengesetzt. Sie besitzt lokal achtzählige Symmetrie.

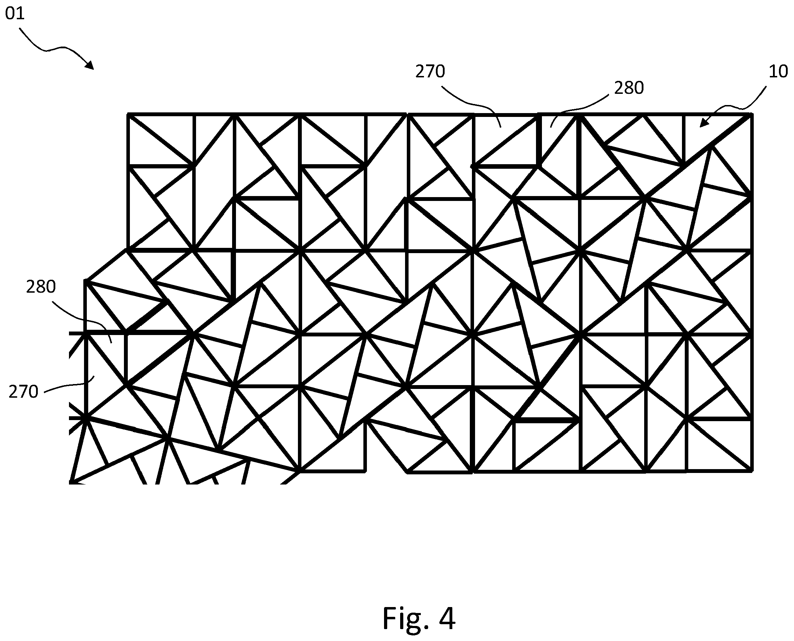

- Fig. 4: einen Ausschnitt eines Ausführungsbeispiels einer mit einer Golden-Pinwheel-Parkettierung versehenen Rückstrahlfläche eines Rückstrahlers in einer Draufsicht. Die Parkettierung ist aus zwei unterschiedlich großen rechtwinkligen Dreiecken zusammengesetzt. Insgesamt besteht sie aus vier unterschiedlichen Kacheln, weil die Dreiecke auch gespiegelt vorkommen. Sie besitzt statistisch kreisförmige Symmetrie, d.h. die Kacheln kommen in einer unendlich großen Parkettierung in jeder beliebigen Orientierung vor.

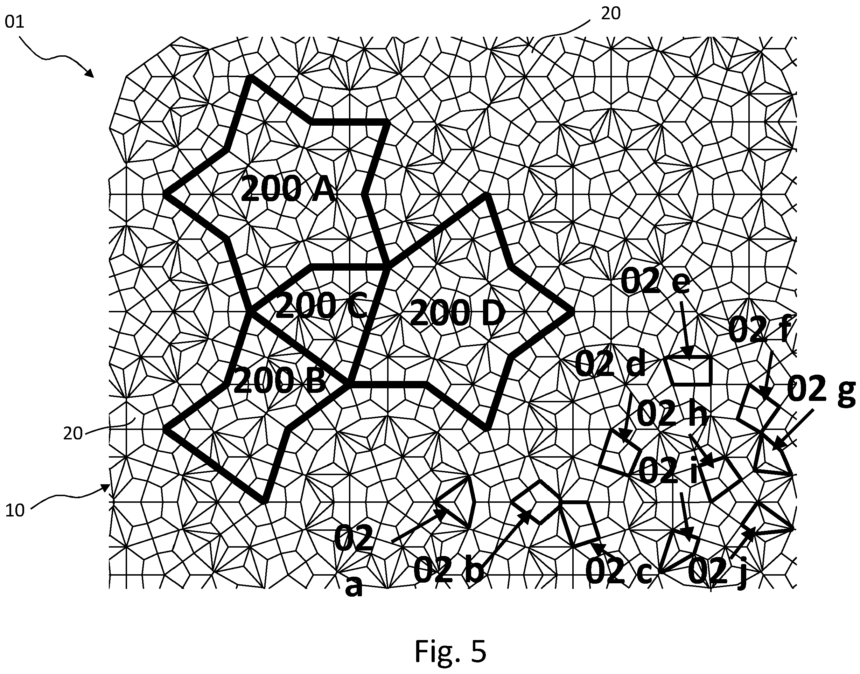

- Fig. 5: einen Ausschnitt einer möglichen Rückstrahlergeometrie eines Ausführungsbeispiels einer mit einer Parkettierung versehenen Rückstrahlfläche eines Rückstrahlers in einer Draufsicht, die einer Penrose-Drachen-Pfeil-Parkettierung stark ähnelt. Die Parkettierung setzt sich aus vier Kacheln (A bis D, jeweils eine Kachel dick hervorgehoben) zusammen. Insgesamt kommen zehn verschiedene Rückstrahlprismen-Geometrien vor (a bis j, mitteldick hervorgehoben). Folglich lässt sich die Parkettierung auch als aperiodische Parkettierung mit diesen zehn Kacheln beschreiben, die jeweils aus nur einem Rückstrahlprisma bestehen.

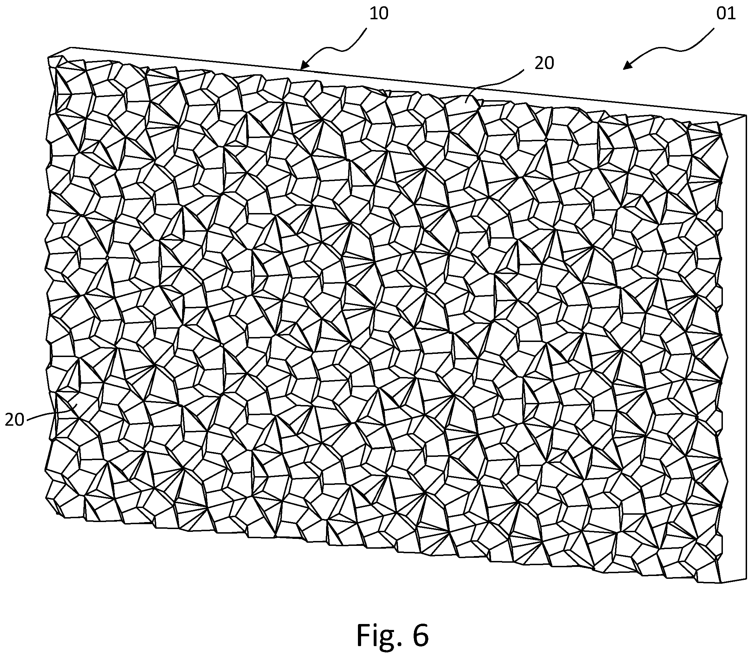

- Fig. 6: eine isometrische Darstellung eines Ausführungsbeispiels eines Rückstrahlers mit der in Fig. 5 gezeigten Art der Parkettierung aus Rückstrahlprismen. Dargestellt ist ein schräger Blick auf die Rückseite des Rückstrahlers, auf der die Rückstrahlprismen sitzen. Die Vorderseite ist in diesem Beispiel eine Planfläche. Die Hauptachse aller Rückstrahlprismen und auch des gesamten Rückstrahlers steht senkrecht auf der Vorderseite des Rückstrahlers.

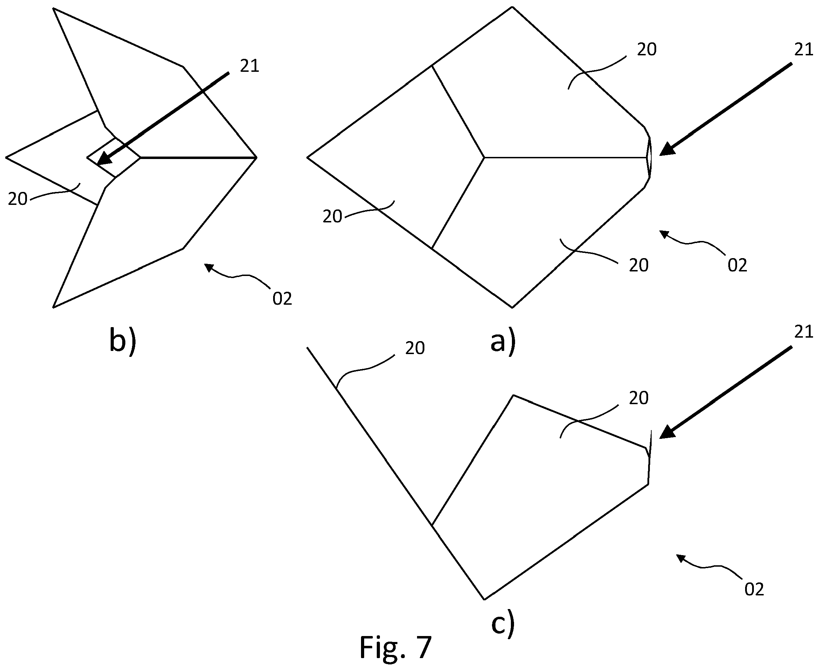

- Fig. 7: eine Detailansicht des Rückstrahlprismas 02 b aus Fig. 5. Rechts-oben in Fig. 7 a) in einer Draufsicht, links in Fig. 7 b) in einer Seitenansicht von rechts und unten in Fig. 7 c) in einer Ansicht von hinten. Auf der rechten Seite befindet sich eine kleine, steile Flanke (Pfeil), die konstruktiv bedingt ist und keine rückstrahlende Wirkung besitzt. Die drei anderen Prismaflächen 20 stehen senkrecht aufeinander und wirken zusammen rückstrahlend.

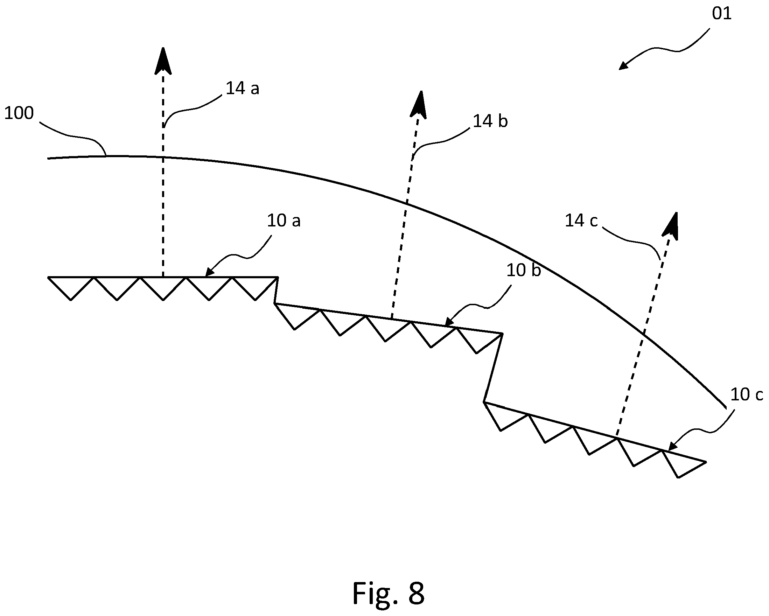

- Fig. 8: eine schematische Darstellung einer abschnittsweisen Änderung der Hauptachsen (gestrichelte Pfeile) der Rückstrahlprismen (Zackenstruktur), um die Lichtbrechung an der Rückstrahlervorderseite zu berücksichtigen, in einem Querschnitt, sodass die Hauptrückstrahlrichtung des gesamten Rückstrahlers (im Bild nach oben) erhalten bleibt. Zusätzlich zur Verkippung der Hauptachsen ist ein Versatz der Prismen senkrecht zur Rückstrahlrichtung dargestellt, um mit der Rückstrahlerrückseite der Kontur der Rückstrahlervorderseite zu folgen. Es entstehen Versatzkanten zwischen den einzelnen Abschnitten.

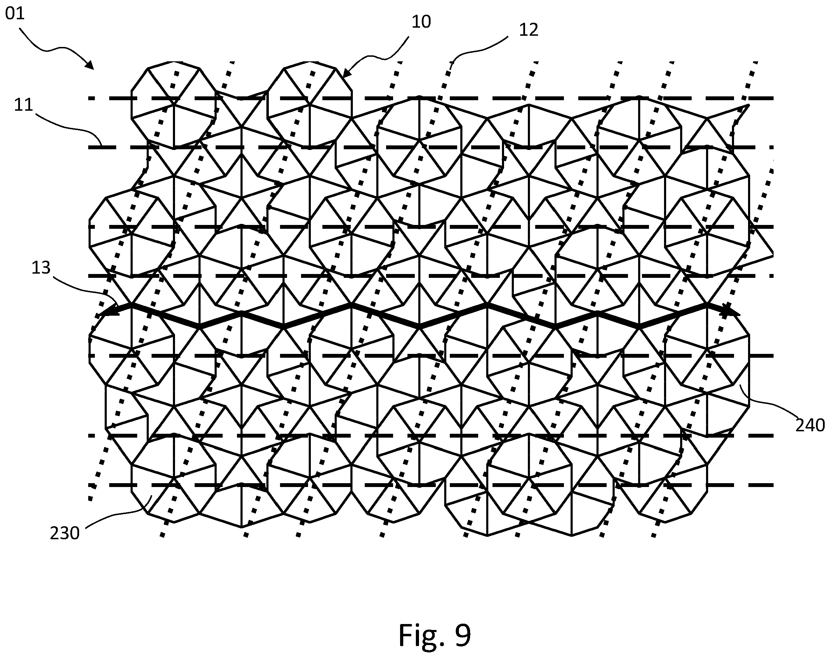

- Fig. 9: einen Ausschnitt einer Penrose-Drachen-Pfeil-Parkettierung mit eingezeichneten Ammann-Bars in zwei der fünf Richtungen in einer Draufsicht. Die gepunkteten und gestrichelten Linien kennzeichnen die Ammann-Bars, die als gerade Linien durch die gesamte Parkettierung laufen und alle Kacheln stets in gleicher Weise schneiden. Es sind nur die Ammann-Bars in zwei Richtungen eingezeichnet, insgesamt existieren Ammann-Bars in fünf Richtungen. Jede Kachel wird von genau drei Ammann-Bars geschnitten. Zusätzlich ist als dicke Linie mit Pfeilenden beispielhaft ein Kantenzug parallel zu einer Richtung der Ammann-Bars eingezeichnet, auf dem die Kantenrichtungen nur um ±18° von der Richtung der Ammann-Bars abweichen.

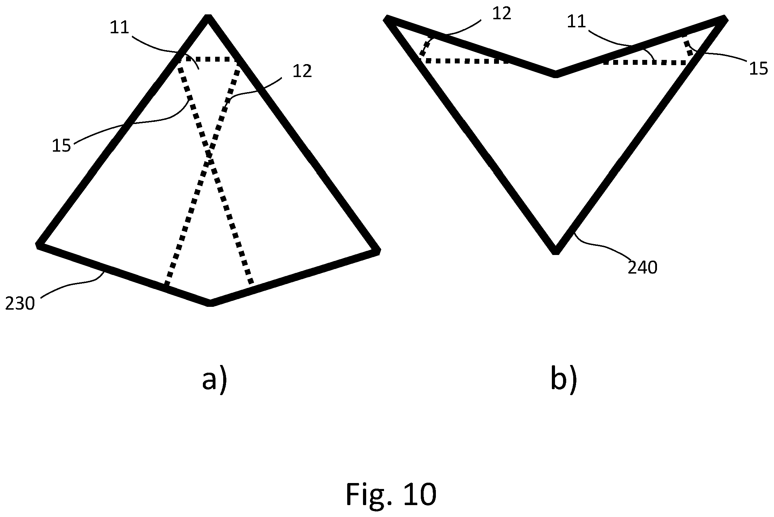

- Fig. 10: eine Drachen- (links in Fig. 10 a)) und Pfeilkachel (rechts in Fig. 10 b)) der Penrose-Drachen-Pfeil-Parkettierung aus Fig. 9 mit gepunktet eingezeichneten Ammann-Bars als sogenannte Dekorationen in einer Draufsicht. In der Parkettierung ergänzen sich diese Linien zu geraden, die durch die gesamte Parkettierung laufen. Andersherum dürfen die Kacheln nur so zusammengefügt werden, dass sich die Linien auf den einzelnen Kacheln zu Geraden ergänzen, um eine flächenfüllende, aperiodische Parkettierung zu erhalten. Die Ammann-Bars lassen sich also nutzen, um Anlegeregeln zu definieren.

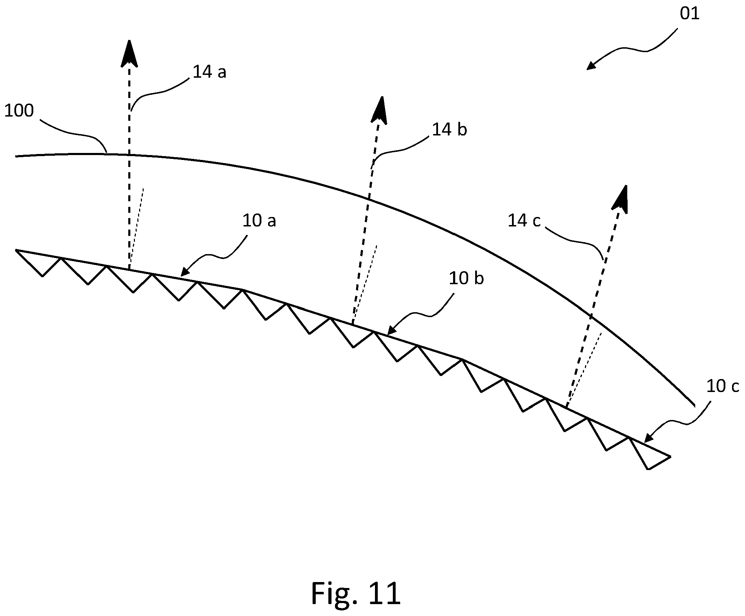

- Fig. 11: eine schematische Darstellung einer abschnittsweisen Änderung der Hauptachsen (gestrichelte Pfeile) der Rückstrahlprismen (Zackenstruktur), um die Lichtbrechung an der Rückstrahlervorderseite zu berücksichtigen, in einem Querschnitt, sodass die Hauptrückstrahlrichtung des gesamten Rückstrahlers (im Bild nach oben) erhalten bleibt. Die Rückstrahlprismen besitzen eine Hauptachse, die nicht senkrecht auf der Ebene steht, in der die Rückstrahlprismen liegen, sondern einheitlich gegen diese Normale geneigt ist. Damit wird der notwendige Versatz zwischen den Abschnitten gegenüber der in Fig. 8 schematisch dargestellten Lösung deutlich reduziert.

Ein in Fig. 1, Fig. 2, Fig. 3, Fig. 4, Fig. 5, Fig. 6, Fig. 7, Fig. 8, Fig. 9, Fig. 10 a), Fig. 10 b), Fig. 11 ganz oder in Teilen dargestellter Rückstrahler 01 mit mindestens einer Rückstrahlfläche 10, 10 a, 10 b, 10 c umfasst mehrere verschiedene Rückstrahlprismen 02 a, 02 b, 02 c, 02 d, 02 e, 02 f, 02 g, 02 h, 02 i, 02 j. Die Rückstrahlprismen 02 a, 02 b, 02 c, 02 d, 02 e, 02 f, 02 g, 02 h, 02 i, 02 j sind jeweils aus mehreren aneinander angrenzenden Prismaflächen 20 zusammengesetzt.

Die verschiedenen Rückstrahlprismen 02, 02 a, 02 b, 02 c, 02 d, 02 e, 02 f, 02 g, 02 h, 02 i, 02 j unterscheiden sich voneinander durch zumindest zum Teil unterschiedliche Geometrien ihrer Prismaflächen 20.

Mehrere Rückstrahlprismen 02, 02 a, 02 b, 02 c, 02 d, 02 e, 02 f, 02 g, 02 h, 02 i, 02 j, von denen es sich bei zumindest zwei vorzugsweise um verschiedene Rückstrahlprismen 02, 02 a, 02 b, 02 c, 02 d, 02 e, 02 f, 02 g, 02 h, 02 i, 02 j mit verschiedenen Geometrien ihrer Prismaflächen 20 handelt, sind zu im Nachfolgenden kurz auch als Kacheln bezeichneten Rückstrahlkacheln 200 A, 200 B, 200 C, 200 D zusammengesetzt.

Die Rückstrahlkacheln 200 A, 200 B, 200 C, 200 D ermöglichen in Verbindung mit:
- einem oder mehreren Rückstrahlprismen 02, 02 a, 02 b, 02 c, 02 d, 02 e, 02 f, 02 g, 02 h, 02 i, 02 j, bei dem oder bei denen es sich um eines oder mehrere selbe Rückstrahlprismen 02, 02 a, 02 b, 02 c, 02 d, 02 e, 02 f, 02 g, 02 h, 02 i, 02 j handeln kann, wie bei denen, die zu Rückstrahlkacheln 200 A, 200 B, 200 C, 200 D zusammengesetzt sind, und/oder bei dem oder bei denen es sich um eines oder mehrere weitere Rückstrahlprismen 02, 02 a, 02 b, 02 c, 02 d, 02 e, 02 f, 02 g, 02 h, 02 i, 02 j handeln kann, bei dem oder bei denen sich die Geometrien deren Prismaflächen 20 zumindest zum Teil von denen, die zu Rückstrahlkacheln 200 A, 200 B, 200 C, 200 D zusammengesetzt sind, unterscheiden, und/oder
- einer oder mehreren identischen Rückstrahlkacheln 200 A, 200 B, 200 C, 200 D, und/oder
- einer oder mehreren aus einer anderen Zahl und/oder Orientierung der selben Rückstrahlprismen 02, 02 a, 02 b, 02 c, 02 d, 02 e, 02 f, 02 g, 02 h, 02 i, 02 j zusammengesetzten anderen Rückstrahlkacheln 200 A, 200 B, 200 C, 200 D, und/oder
- einer oder mehreren aus einem oder mehreren weiteren Rückstrahlprismen 02, 02 a, 02 b, 02 c, 02 d, 02 e, 02 f, 02 g, 02 h, 02 i, 02 j bei dem oder bei denen sich die Geometrien deren Prismaflächen 20 von denen, die zu Rückstrahlkacheln 200 A, 200 B, 200 C, 200 D zusammengesetzt sind, unterscheiden, zusammengesetzten weiteren Rückstrahlkacheln 200 A, 200 B, 200 C, 200 D,
eine lückenlose, aperiodische Parkettierung der Rückstrahlfläche 10.

Vorzugsweise kommt von den Rückstrahlkacheln und/oder von den anderen Rückstrahlkacheln und/oder von den weiteren Rückstrahlkacheln mindestens eine mindestens zweimal zumindest teilweise im Rückstrahler 01, insbesondere in dessen mindestens einer Rückstrahlfläche 10, 10 a, 10 b, 10 c vor.

Die Rückstrahlkacheln 200 A, 200 B, 200 C, 200 D weisen jeweils einen beispielsweise in Fig. 5 entlang der Hervorhebung jeweils einer der Kacheln 200 A, 200 B, 200 C, 200 D verlaufenden Rand auf.

Vorteilhaft liegt dieser Rand einer jeden Kachel 200 A, 200 B, 200 C, 200 D innerhalb einer gemeinsamen, stetigen Fläche, entlang welcher sich die Rückstrahlfläche 10 erstreckt.

Demnach kann der Rückstrahler 01 mit seiner Rückstrahlfläche 10 mehrere Rückstrahlprismen 02, 02 a, 02 b, 02 c, 02 d, 02 e, 02 f, 02 g, 02 h, 02 i, 02 j umfassen, die jeweils aus einer oder mehreren aneinander angrenzenden Prismaflächen 20 zusammengesetzt sind, wobei mehrere Rückstrahlprismen 02, 02 a, 02 b, 02 c, 02 d, 02 e, 02 f, 02 g, 02 h, 02 i, 02 j mit verschiedenen Geometrien ihrer Prismaflächen 20 zu Rückstrahlkacheln 200 A, 200 B, 200 C, 200 D zusammengesetzt sind, die eine lückenlose, aperiodische Parkettierung der Rückstrahlfläche 10 ermöglichen, wobei die Rückstrahlkacheln 200 A, 200 B, 200 C, 200 D jeweils einen Rand aufweisen, der innerhalb einer gemeinsamen, stetigen Fläche liegt, entlang welcher sich die Rückstrahlfläche 10 erstreckt.

Die lückenlose, aperiodische Parkettierung kann in Verbindung mit einer oder mehreren identischen Rückstrahlkacheln 200 A, 200 B, 200 C, 200 D erhalten werden.

Identische Rückstrahlkacheln 200 A, 200 B, 200 C, 200 D bezeichnen hierbei Rückstrahlkacheln 200 A, 200 B, 200 C, 200 D, die aus einer identischen Zahl innerhalb der Rückstrahlkachel 200 A, 200 B, 200 C, 200 D identisch orientierter, identischer Rückstrahlprismen 02, 02 a, 02 b, 02 c, 02 d, 02 e, 02 f, 02 g, 02 h, 02 i, 02 j zusammengesetzt sind. Identische Rückstrahlkacheln 200 A, 200 B, 200 C, 200 D können durchaus in unterschiedlichen Orientierungen innerhalb der Parkettierung vorliegen.

Alternativ oder zusätzlich kann die lückenlose, aperiodische Parkettierung in Verbindung mit einem Rückstrahlprisma 02, 02 a, 02 b, 02 c, 02 d, 02 e, 02 f, 02 g, 02 h, 02 i, 02 j oder mit mehreren Rückstrahlprismen 02, 02 a, 02 b, 02 c, 02 d, 02 e, 02 f, 02 g, 02 h, 02 i, 02 j erhalten werden, bei dem oder bei denen es sich um eines oder mehrere selbe Rückstrahlprismen 02, 02 a, 02 b, 02 c, 02 d, 02 e, 02 f, 02 g, 02 h, 02 i, 02 j handelt, wie bei denen, die zu Rückstrahlkacheln 200 A, 200 B, 200 C, 200 D zusammengesetzt sind, und/oder bei dem oder bei denen es sich um eines oder mehrere weitere Rückstrahlprismen 02, 02 a, 02 b, 02 c, 02 d, 02 e, 02 f, 02 g, 02 h, 02 i, 02 j handelt, bei dem oder bei denen sich die Geometrien deren Prismaflächen 20 von denen, die zu Rückstrahlkacheln 200 A, 200 B, 200 C, 200 D zusammengesetzt sind, unterscheiden.

Selbe Rückstrahlprismen 02, 02 a, 02 b, 02 c, 02 d, 02 e, 02 f, 02 g, 02 h, 02 i, 02 j bezeichnen hierbei solche Rückstrahlprismen 02, 02 a, 02 b, 02 c, 02 d, 02 e, 02 f, 02 g, 02 h, 02 i, 02 j, die auch in einer oder in mehreren Rückstrahlkacheln 200 A, 200 B, 200 C, 200 D vorkommen, die innerhalb der Parkettierung vorhanden sind.

Im Gegensatz hierzu bezeichnet weitere Rückstrahlprismen 02, 02 a, 02 b, 02 c, 02 d, 02 e, 02 f, 02 g, 02 h, 02 i, 02 j von den selben Rückstrahlprismen 02, 02 a, 02 b, 02 c, 02 d, 02 e, 02 f, 02 g, 02 h, 02 i, 02 j in Geometrie und/oder Anzahl ihrer Prismaflächen 20 verschiedene Rückstrahlprismen 02, 02 a, 02 b, 02 c, 02 d, 02 e, 02 f, 02 g, 02 h, 02 i, 02 j.

Wiederum alternativ oder zusätzlich kann die lückenlose, aperiodische Parkettierung in Verbindung mit einer oder mehreren von den Rückstrahlkacheln 200 A, 200 B, 200 C, 200 D verschiedenen, anderen Rückstrahlkacheln 200 A, 200 B, 200 C, 200 D erhalten werden, welche eine oder mehrere anderen Rückstrahlkacheln 200 A, 200 B, 200 C, 200 D aus einer anderen Zahl und/oder Orientierung der selben Rückstrahlprismen 02, 02 a, 02 b, 02 c, 02 d, 02 e, 02 f, 02 g, 02 h, 02 i, 02 j zusammengesetzt sind, wie denjenigen selben Rückstrahlprismen 02, 02 a, 02 b, 02 c, 02 d, 02 e, 02 f, 02 g, 02 h, 02 i, 02 j, die zu von den anderen Rückstrahlkacheln 200 A, 200 B, 200 C, 200 D verschiedenen Rückstrahlkacheln 200 A, 200 B, 200 C, 200 D zusammengesetzt sind.

Schließlich kann die lückenlose, aperiodische Parkettierung ebenfalls alternativ oder zusätzlich in Verbindung mit einer oder mehreren von den Rückstrahlkacheln 200 A, 200 B, 200 C, 200 D und von den gegebenenfalls vorhandenen anderen Rückstrahlkacheln 200 A, 200 B, 200 C, 200 D verschiedenen weiteren Rückstrahlkacheln 200 A, 200 B, 200 C, 200 D erhalten werden, welche eine oder mehrere weiteren Rückstrahlkacheln 200 A, 200 B, 200 C, 200 D aus einem oder mehreren weiteren Rückstrahlprismen 02, 02 a, 02 b, 02 c, 02 d, 02 e, 02 f, 02 g, 02 h, 02 i, 02 j zusammengesetzt sind, bei dem oder bei den weiteren Rückstrahlprismen 02, 02 a, 02 b, 02 c, 02 d, 02 e, 02 f, 02 g, 02 h, 02 i, 02 j sich die Geometrien deren Prismaflächen 20 von denen unterscheiden, die zu selben Rückstrahlprismen 02, 02 a, 02 b, 02 c, 02 d, 02 e, 02 f, 02 g, 02 h, 02 i, 02 j zusammengesetzt sind, die wiederum zu den selben Rückstrahlkacheln 200 A, 200 B, 200 C, 200 D zusammengesetzt sind, von denen die weiteren Rückstrahlprismen 02, 02 a, 02 b, 02 c, 02 d, 02 e, 02 f, 02 g, 02 h, 02 i, 02 j verschieden sind.

Demnach ist vorgesehen, mehrere Rückstrahlprismen 02, 02 a, 02 b, 02 c, 02 d, 02 e, 02 f, 02 g, 02 h, 02 i, 02 j aus Prismaflächen 20 unterschiedlicher Geometrie und Orientierung zu Rückstrahlkacheln 200 A, 200 B, 200 C, 200 D zusammenzufassen, welche entweder für sich genommen eine lückenlose Parkettierung einer Rückstrahlfläche 10 zulassen, oder in Kombination mit einer oder mehreren für die Rückstrahlkacheln 200 A, 200 B, 200 C, 200 D herangezogenen Rückstrahlprismen 02, 02 a, 02 b, 02 c, 02 d, 02 e, 02 f, 02 g, 02 h, 02 i, 02 j und/oder in Kombination mit einer oder mehreren von den für die Rückstrahlkacheln 200 A, 200 B, 200 C, 200 D herangezogenen Rückstrahlprismen 02, 02 a, 02 b, 02 c, 02 d, 02 e, 02 f, 02 g, 02 h, 02 i, 02 j verschiedenen weiteren Rückstrahlprismen 02, 02 a, 02 b, 02 c, 02 d, 02 e, 02 f, 02 g, 02 h, 02 i, 02 j und/oder in Kombination mit einer oder mehreren weiteren Rückstrahlkacheln 200 A, 200 B, 200 C, 200 D, welche weiteren Rückstrahlkacheln 200 A, 200 B, 200 C, 200 D weitere Rückstrahlprismen 02, 02 a, 02 b, 02 c, 02 d, 02 e, 02 f, 02 g, 02 h, 02 i, 02 j mit von den Prismaflächen 20 der Rückstrahlprismen 02, 02 a, 02 b, 02 c, 02 d, 02 e, 02 f, 02 g, 02 h, 02 i, 02 j abweichender Geometrie und/oder Orientierung umfassen oder aufweisen können, eine lückenlose, aperiodische Parkettierung der Rückstrahlfläche 10 zulassen.

Hiernach kann auch eine Kombination mit einer oder mehreren Rückstrahlprismen 02, 02 a, 02 b, 02 c, 02 d, 02 e, 02 f, 02 g, 02 h, 02 i, 02 j der selben Geometrie und/oder eine Kombination mit einer oder mehreren weiteren Rückstrahlprismen 02, 02 a, 02 b, 02 c, 02 d, 02 e, 02 f, 02 g, 02 h, 02 i, 02 j verschiedener Geometrie alternativ oder zusätzlich zum Erhalt einer lückenlosen Parkettierung der Rückstrahlfläche 10 herangezogen werden.

Die Rückstrahlkacheln 200 A, 200 B, 200 C, 200 D ermöglichen in Kombination mit sich selbst und/oder mit einer oder mehreren anderen Rückstrahlkacheln 200 A, 200 B, 200 C, 200 D, die zwar aus den selben Rückstrahlprismen 02, 02 a, 02 b, 02 c, 02 d, 02 e, 02 f, 02 g, 02 h, 02 i, 02 j aufgebaut sind, sich jedoch in deren Anzahl und/oder Anordnung und/oder Orientierung unterscheiden, und/oder mit einer oder mehreren weiteren Rückstrahlkacheln 200 A, 200 B, 200 C, 200 D und/oder mit einem oder mehreren Rückstrahlprismen 02, 02 a, 02 b, 02 c, 02 d, 02 e, 02 f, 02 g, 02 h, 02 i, 02 j eine lückenlose, aperiodische Parkettierung.

Zusammengefasst umfasst die Rückstrahlfläche 10 des Rückstrahlers 01 mehrere Rückstrahlprismen 02, 02 a, 02 b, 02 c, 02 d, 02 e, 02 f, 02 g, 02 h, 02 i, 02 j, die jeweils aus mindestens einer, bevorzugt jedoch aus mehreren aneinander angrenzenden Prismaflächen 20 zusammengesetzt sind. Mehrere Rückstrahlprismen 02, 02 a, 02 b, 02 c, 02 d, 02 e, 02 f, 02 g, 02 h, 02 i, 02 j mit verschiedenen Geometrien ihrer Prismaflächen 20 sind zu Rückstrahlkacheln zusammengesetzt, die in Verbindung mit identischen Rückstrahlkacheln oder mit weiteren Rückstrahlkacheln 200 A, 200 B, 200 C, 200 D mit abweichenden Geometrien der weiteren Prismaflächen 20 ihrer weiteren Rückstrahlprismen 02, 02 a, 02 b, 02 c, 02 d, 02 e, 02 f, 02 g, 02 h, 02 i, 02 j eine lückenlose Parkettierung der Rückstrahlfläche 10 ermöglichen, wobei die Rückstrahlkacheln 200 A, 200 B, 200 C, 200 D jeweils einen Rand aufweisen, der innerhalb einer gemeinsamen, stetigen Fläche liegt, entlang welcher sich die Rückstrahlfläche 10 erstreckt.

Vorteilhaft wird die Parkettierung aus mindestens zwei unterschiedlichen Grundkacheln zusammengesetzt, wobei es jeweils unendlich viele unterschiedliche Parkettierungsmöglichkeiten gibt.

Beispiele für geeignete Kacheln 200 A, 200 B, 200 C, 200 D sind:
- schmale und breite Rauten,
- Drachen und Pfeil, sowie
- Stern, Krone, Raute und Fünfecke.

Hierbei umfassen die Rückstrahlkacheln 200 A, 200 B, 200 C, 200 D und/oder die weiteren Rückstrahlkacheln 200 A, 200 B, 200 C, 200 D in einer Draufsicht auf die Rückstrahlfläche 10 gesehen:
- schmale und breite Rauten, und/oder
- Drachen und Pfeil, und/oder
- Stern, Krone, Raute und Fünfecke
bildende Rückstrahlprismen 02, 02 a, 02 b, 02 c, 02 d, 02 e, 02 f, 02 g, 02 h, 02 i, 02 j.

Bevorzugt wird eine aus der Mathematik bekannte aperiodische Parkettierung herangezogen, um die Rückstrahlfläche 10 zu parkettieren.

Die Umrisse der verschiedenen Rückstrahlprismen 02, 02 a, 02 b, 02 c, 02 d, 02 e, 02 f, 02 g, 02 h, 02 i, 02 j und/oder die Umrisse der aus mehreren Rückstrahlprismen 02, 02 a, 02 b, 02 c, 02 d, 02 e, 02 f, 02 g, 02 h, 02 i, 02 j zusammengesetzten Rückstrahlkacheln 200 A, 200 B, 200 C, 200 D nehmen in einer Draufsicht auf die Rückstrahlfläche 10 gesehen die den Elementen einer geeigneten, aus der Mathematik bekannten aperiodischen Parkettierung entsprechenden Geometrien innerhalb der jeweiligen aus der Mathematik bekannten Parkettierung ein.

Die Außenumrisse der einzelnen Elemente einer aus der Mathematik bekannten aperiodischen Parkettierung können dabei auf die Rückstrahlprismen 02, 02 a, 02 b, 02 c, 02 d, 02 e, 02 f, 02 g, 02 h, 02 i, 02 j und/oder die Rückstrahlkacheln 200 A, 200 B, 200 C, 200 D beispielsweise derart übertragen werden, dass die zueinander in einer vorgegebenen Orientierung stehenden Prismaflächen 20:
- eines Rückstrahlprismas 02, 02 a, 02 b, 02 c, 02 d, 02 e, 02 f, 02 g, 02 h, 02 i, 02 j, oder
- mehrerer, zu einer Rückstrahlkachel 200 A, 200 B, 200 C, 200 D zusammengesetzter Rückstrahlprismen 02, 02 a, 02 b, 02 c, 02 d, 02 e, 02 f, 02 g, 02 h, 02 i, 02 j, oder
- einer oder mehrerer Rückstrahlkacheln 200 A, 200 B, 200 C, 200 D
in einer Draufsicht den Außenumrissen dieser Elemente entsprechen.

Alternativ oder zusätzlich können die aus der Mathematik bekannten Parkettierungen auf die Rückstrahlprismen 02, 02 a, 02 b, 02 c, 02 d, 02 e, 02 f, 02 g, 02 h, 02 i, 02 j und/oder Rückstrahlkacheln 200 A, 200 B, 200 C, 200 D derart übertragen werden, dass:
- die Umrisse der verschiedenen Rückstrahlprismen 02, 02 a, 02 b, 02 c, 02 d, 02 e, 02 f, 02 g, 02 h, 02 i, 02 j, und/oder
- die Umrisse der aus mehreren Rückstrahlprismen 02, 02 a, 02 b, 02 c, 02 d, 02 e, 02 f, 02 g, 02 h, 02 i, 02 j zusammengesetzten Rückstrahlkacheln 200 A, 200 B, 200 C, 200 D, und/oder
- die Umrisse verschiedener, jeweils aus mehreren beispielsweise verschiedenen Rückstrahlprismen 02, 02 a, 02 b, 02 c, 02 d, 02 e, 02 f, 02 g, 02 h, 02 i, 02 j und/oder einer verschiedenen Anzahl von Rückstrahlprismen 02, 02 a, 02 b, 02 c, 02 d, 02 e, 02 f, 02 g, 02 h, 02 i, 02 j zusammengesetzten Rückstrahlkacheln 200 A, 200 B, 200 C, 200 D
in einer Draufsicht auf die Rückstrahlfläche 10 die Außenumrisse der einzelnen Elemente einer aus der Mathematik bekannten aperiodischen Parkettierung einnehmen.

Ein wesentlicher Vorteil ist dabei, dass nur eine kleine Anzahl von Rückstrahlkacheln 200 A, 200 B, 200 C, 200 D benötigt wird, was wiederum zu einer kleinen Anzahl unterschiedlicher Rückstrahlprismen 02, 02 a, 02 b, 02 c, 02 d, 02 e, 02 f, 02 g, 02 h, 02 i, 02 j führt und damit eine kostengünstige Herstellung ermöglicht. Zudem gibt die Mathematik genaue Konstruktionsvorschriften, mit denen die Parkettierung erzeugt werden kann. Eine komplett freie Konstruktion wäre extrem zeitaufwändig.

Um eine hohe Rückstrahleffizienz zu erreichen, ist es erforderlich, die Rückstrahlfläche 10 zumindest weitgehend flächenfüllend mit Rückstrahlprismen 02, 02 a, 02 b, 02 c, 02 d, 02 e, 02 f, 02 g, 02 h, 02 i, 02 j zu belegen.

Vorteilhaft handelt es sich bei der Parkettierung um eine aperiodische Parkettierung. Insbesondere eine aperiodische Parkettierung erlaubt die Rückstrahlfläche 10 zumindest weitgehend flächenfüllend mit Rückstrahlprismen 02, 02 a, 02 b, 02 c, 02 d, 02 e, 02 f, 02 g, 02 h, 02 i, 02 j zu belegen.

Aus der Mathematik sind viele solcher aperiodischen Parkettierungen bekannt. Das bekannteste Beispiel ist die Penrose-Rauten-Parkettierung.

Die lückenlose, aperiodische Parkettierung kann daher vorteilhaft eine Penrose-Rauten-Parkettierung umfassen.

Vorteilhaft wird eine bekannte aperiodische Parkettierung auf die Anwendung für den Rückstrahler übertragen.

Die Erfindung schlägt demnach vor, Rückstrahlprismen 02, 02 a, 02 b, 02 c, 02 d, 02 e, 02 f, 02 g, 02 h, 02 i, 02 j so zuzuschneiden, dass ihre Außenkonturen einzeln oder bevorzugt zu mehreren zusammengefasst im vorliegenden Dokument Rückstrahlkacheln 200 A, 200 B, 200 C, 200 D oder kurz Kacheln bezeichnete Formen aufweisen, mit denen eine lückenlose, aperiodische Parkettierung möglich ist.

In der Mathematik sind sehr viele unterschiedliche aperiodische Parkettierungen bekannt, die nach unterschiedlichen Kriterien klassifiziert werden können. Für Rückstrahler 01 sind insbesondere aperiodische Parkettierungen geeignet, deren lokale Symmetrie nicht durch drei teilbar ist, bevorzugt auch nicht durch zwei teilbar. Dies wird durch die Zähligkeit ihrer Symmetrie ausgedrückt. Eine durch drei teilbare Symmetrie wird demnach kurz als dreizählige Symmetrie bezeichnet.

Fig. 1 zeigt einen Ausschnitt einer mit einer Penrose-Rauten-Parkettierung versehenen Rückstrahlfläche 10 eines Rückstrahlers 01. Die Parkettierung ist aus einer schmalen und einer breiten Raute als Kacheln zusammengesetzt. Sie besitzt lokal fünfzählige Symmetrie.

Gut geeignet sind viele sogenannte cut-and-project-Parkettierungen, die durch die Projektion bestimmter Punkte höherdimensionaler Gitter erzeugt werden können. Sie enthalten oft optisch ansprechende lokale Symmetrie.

Eine weitere Möglichkeit, die Rotationssymmetrie des Rückstrahlers zu verbessern und unerwünschte Reflexionen zu verringern, sind Parkettierungen, in denen die Rückstrahlkacheln 200 A, 200 B, 200 C, 200 D in theoretisch unendlich vielen Orientierungen vorkommen. Hierbei handelt es sich um Parkettierungen mit sogenannter statistical circular symmetry.

Aperiodische Parkettierungen sind stets quasi-periodische Parkettierungen. Das heißt, diese Parkettierungen besitzen keine Translationssymmetrie, jedoch findet sich in einer unendlich großen Parkettierung jeder Ausschnitt, teilweise gedreht, beliebig oft an unterschiedlichen Stellen der Parkettierung wieder. Um aus geeigneten Rückstrahlkacheln 200 A, 200 B, 200 C, 200 D eine aperiodische Parkettierung zu erzeugen, sind entsprechende Regeln zu beachten, die vorschreiben, auf welche Weise zwei Rückstrahlkacheln 200 A, 200 B, 200 C, 200 D aneinandergefügt werden dürfen. Diese Regeln stellen zum einen sicher, dass keine periodische Parkettierung entstehen kann. Zum anderen stellen diese Regeln sicher, dass eine flächenfüllende Parkettierung möglich ist. Die Regeln können in Form von lokalen Anlegeregeln festgelegt sein oder durch eine Konstruktionsvorschrift für die Parkettierung. Letzteres kann eine Substitutionsregel sein, nach der alle vorhandenen Kacheln erst durch Skalierung vergrößert werden und anschließend durch wieder kleinere Kacheln ersetzt werden. Die Parkettierung wird dann erzeugt, indem mit einer oder wenigen Kacheln begonnen wird und alle Kacheln immer wieder skaliert und durch kleinere ersetzt werden, bis die gewünschte Fläche parkettiert ist.

In der Mathematik werden gewöhnlich Parkettierungen der unendlich ausgedehnten Ebene betrachtet. Es sind aber auch Parkettierungen möglich, die eine andersartige, beispielsweise gewölbte Fläche überspannen. Unabhängig davon wird in einem Rückstrahler 01 nur ein endlicher Ausschnitt einer solchen Parkettierung verwendet. Bei einem Rückstrahler 01 gemäß einer vorteilhaften Weiterbildung der Erfindung ist dieser Ausschnitt jedoch mindestens so groß, dass sich Kacheln definieren lassen, die für eine unendlich ausgedehnte aperiodische Parkettierung geeignet sind, und von denen mindestens eine mindestens zweimal zumindest teilweise im Rückstrahler vorkommt.

Die gleichartigen Kacheln haben den Vorteil, dass der gesamte Rückstrahler aus wenigen unterschiedlichen Rückstrahlprismen-Formen zusammengesetzt werden kann. Dies ist konstruktiv erheblich weniger Aufwand als jedes einzelne Rückstrahlprisma einzeln gestalten zu müssen. Auch die Werkzeugherstellung für ein Spritzgusswerkzeug wird vereinfacht, weil nur eine kleine Zahl unterschiedlich geformter sogenannter Galvanos vorkommt. Es können also mehrere gleichartige Galvanos produziert werden.

Einige bekannte Kachelformen, mit denen eine Parkettierungen mit nur zwei Kachelformen möglich ist, sind beispielsweise:
- eine schmale Raute 210 mit 36°-Winkel ihren spitzen Ecken und eine breite Raute 220 mit 72°-Winkel an ihren spitzen Ecken, wobei alle Kanten gleich lang sind. Eine mit schmalen Rauten 210 und mit breiten Rauten 220 verwirklichte Parkettierung ist eine in Fig. 1 dargestellte Penrose-Rauten-Parkettierung. Die mit schmalen Rauten 210 und mit breiten Rauten 220 verwirklichte Penrose-Rauten-Parkettierung weist eine lokal fünfzählige Rotationssymmetrie auf.
- eine Drachenform (Fig. 10 a)) mit einer 36°-Ecke und einer gegenüberliegenden konvexen 144°-Ecke und eine Pfeilform 240 (Fig. 10 b)) mit einer 36°-Ecke und einer gegenüberliegenden konkaven 144°-Ecke, wobei die an den 36°-Winkel angrenzenden Kanten bei beiden Kacheln 230, 240 gleich lang sind. Eine mit einer Drachenform 230 mit einer 36°-Ecke und einer gegenüberliegenden konvexen 144°-Ecke und mit einer Pfeilform 240 mit einer 36°-Ecke und einer gegenüberliegenden konkaven 144°-Ecke verwirklichte Parkettierung ist eine in Fig. 2 dargestellte Penrose-Drachen-Pfeil-Parkettierung. Die mit einer Drachenform 230 mit einer 36°-Ecke und einer gegenüberliegenden konvexen 144°-Ecke und mit einer Pfeilform 240 mit einer 36°-Ecke und einer gegenüberliegenden konkaven 144°-Ecke verwirklichte Penrose-Drachen-Pfeil-Parkettierung weist ebenfalls eine lokal fünfzählige Rotationssymmetrie auf.
- ein Quadrat 250 und eine Raute 260 gleicher Kantenlänge mit 45°-Winkel. Eine mit einem Quadrat 250 und mit einer Raute 260 gleicher Kantenlänge mit 45°-Winkel verwirklichte Parkettierung ist eine in Fig. 3 dargestellte Ammann-Beenker-Parkettierung. Die in Fig. 3 gezeigte Ammann-Beenker-Parkettierung weist lokal achtzählige Rotationssymmetrie auf.
- ein Quadrat und gleichseitige Dreiecke, wobei die Kanten aller Formen gleich lang sind. Eine solche, von Joshua Socolar beschriebene Parkettierung weist eine lokal sechzählige Rotationssymmetrie auf.

Zerlegen lassen sich die beiden erstgenannten Kachelformen in drei Kacheln, mit denen entsprechend auch eine Penrose-Parkettierung möglich ist:
- ein gleichseitiges Dreieck mit 36°-Winkel zwischen den gleich langen Schenkeln.
- ein rechtwinkliges Dreieck mit einem 36°-Winkel und einer Hypotenuse mit der Länge der Schenkel des gleichschenkligen Dreiecks.
- obiges, zuvor beschriebenes rechtwinkliges Dreieck gespiegelt.

Eine aperiodische Parkettierung mit lokal siebenzähliger Symmetrie ist nach Joshua Socolar beispielsweise möglich mit:
- drei Rauten gleicher Kantenlänge mit Winkeln von 1/7*360°, 2/7*360° und 3/7*360°.

Es sind auch aperiodische Parkettierungen möglich, bei denen die Kacheln in unendlich vielen Orientierungen vorkommen. Ein Rückstrahler mit vielen Rückstrahlprismen hätte mit einer solchen Parkettierung eine vollständig rotationssymmetrische Rückstrahlcharakteristik. Ein Beispiel ist:
- zwei in mathematischem Sinne ähnliche, nämlich winkelgleiche, rechtwinklige Dreiecke 270, 280, bei denen die Länge der Hypotenuse das (1+√5)/2-fache der Länge der kürzeren Kathete ist. Dieses Längenverhältnis ist auch als goldener Schnitt bekannt oder wird als solcher bezeichnet. Die beiden Katheten des größeren Dreiecks 270 besitzen die Länge der längeren Kathete beziehungsweise der Hypotenuse des kleineren Dreiecks 280. Hinzu kommen die gespiegelten Formen dieser Dreiecke 270, 280. Eine mit einem größeren rechtwinkligen Dreieck 270 und mit einem kleineren rechtwinkligen Dreieck 280, bei denen die beiden Katheten des größeren Dreiecks 270 die Länge der längeren Kathete beziehungsweise der Hypotenuse des kleineren Dreiecks 280 besitzen, verwirklichte Parkettierung ist eine in Fig. 4 dargestellte Golden Pinwheel Parkettierung nach Dirk Frettlöh.

Grundsätzlich sind unendlich viele Kachelformen denkbar, mit denen eine aperiodische Parkettierung der Ebene möglich ist. Insbesondere ist es möglich, durch Zusammenfügen der oben genannten Kacheln neue Kachelformen zu erzeugen, mit denen ebenso eine aperiodische Parkettierung möglich ist. Die Anzahl der benötigten unterschiedlichen Kachelformen steigt dabei in der Regel. Außerdem können die Kacheln meist verändert werden, indem die geraden Kanten durch passende, anders geformte Kanten ersetzt werden. Mathematisch sind die so entstehenden Parkettierungen jedoch eng verwandt.

Weil aperiodische Parkettierungen ihrer Bezeichnung gerecht werdend nicht periodisch sind, existieren zu jedem geeigneten Satz von Kacheln unendlich viele mögliche aperiodische Parkettierungen. Selbst bei einem endlichen Ausschnitt aus einer solchen Parkettierung, wie ihn ein Rückstrahler darstellt, gibt es immer noch viele verschiedene Möglichkeiten, die Kacheln zu einer aperiodischen Parkettierung zusammenzufügen.

Ein Rückstrahlprisma 02, 02 a, 02 b, 02 c, 02 d, 02 e, 02 f, 02 g, 02 h, 02 i, 02 j besteht beispielsweise aus drei senkrecht oder nahezu senkrecht aufeinander stehenden, Seitenflächen bildenden Prismaflächen 20. Die gedachte Achse durch den Schnittpunkt der drei Seitenflächen, bei der an jedem Punkt der Abstand zu den Ebenen, in denen die drei Seitenflächen liegen, jeweils gleich ist, wird im Folgenden als Hauptachse bezeichnet.

Kacheln, mit denen eine aperiodische Parkettierung möglich ist, weisen oft Winkel zwischen benachbarten Kanten auf, die nicht 60° betragen. Wird ein Rückstrahlprisma so zugeschnitten, dass es in Projektion auf eine Ebene senkrecht zu seiner Hauptachse die Form einer solchen Kachel besitzt, so liegen die Außenkanten nicht in einer Ebene. Die Oberflächen zweier benachbarter Kacheln in der Parkettierung gehen daher in der Regel nicht stetig ineinander über.

Um eine stetige Oberfläche zu erhalten, werden eine oder mehrere der verwendeten Kacheln aus mehreren Rückstrahlprismen 02, 02 a, 02 b, 02 c, 02 d, 02 e, 02 f, 02 g, 02 h, 02 i, 02 j zusammengesetzt. Im einfachsten, bevorzugten Fall werden so Kacheln erstellt, deren Rand in einer Fläche, beispielsweise in einer Ebene liegt. Eine Parkettierung mit diesen Kacheln erzeugt dann immer eine stetige Oberfläche.

Einzelne Rückstrahlprismen 02, 02 a, 02 b, 02 c, 02 d, 02 e, 02 f, 02 g, 02 h, 02 i, 02 j zu entsprechenden, mathematisch vorgegebenen Rückstrahlkacheln 200 A, 200 B, 200 C, 200 D zurechtzuschneiden führt zu Versatzkanten zwischen den Rückstrahlprismen 02, 02 a, 02 b, 02 c, 02 d, 02 e, 02 f, 02 g, 02 h, 02 i, 02 j, weil deren Oberflächen nicht stetig ineinander übergehen. Zudem ergeben sich dadurch auch oft ineffiziente Rückstrahlprismen 02, 02 a, 02 b, 02 c, 02 d, 02 e, 02 f, 02 g, 02 h, 02 i, 02 j.

Zur Beseitigung diesen Nachteils sieht die Erfindung vorteilhaft vor, eine Rückstrahlkachel 200 A, 200 B, 200 C, 200 D jeweils aus mehreren, geeignet zurechtgeschnittenen Rückstrahlprismen 02, 02 a, 02 b, 02 c, 02 d, 02 e, 02 f, 02 g, 02 h, 02 i, 02 j zusammenzusetzen.

Damit ist es nicht nur möglich, effizientere Rückstrahlprismen 02, 02 a, 02 b, 02 c, 02 d, 02 e, 02 f, 02 g, 02 h, 02 i, 02 j zu verwenden, sondern auch, dass der umlaufende Rand einer jeden Rückstrahlkachel 200 A, 200 B, 200 C, 200 D innerhalb einer stetigen Fläche liegt. Hierdurch kann eine Parkettierung aus mehreren Rückstrahlkacheln 200 A, 200 B, 200 C, 200 D an jede beliebige stetige Oberfläche angepasst werden, weil es möglich ist, mit jeder Rückstrahlkachel 200 A, 200 B, 200 C, 200 D aus mehreren Rückstrahlprismen 02, 02 a, 02 b, 02 c, 02 d, 02 e, 02 f, 02 g, 02 h, 02 i, 02 j eine insgesamt stetige Oberfläche zu erzeugen. Wesentlich dafür ist die Erkenntnis, dass nur wenige Zusammenfügungen benachbarter Rückstrahlkacheln 200 A, 200 B, 200 C, 200 D berücksichtigt werden müssen.

Es sind jedoch auch aperiodische Parkettierungen mit stetiger Oberfläche möglich, wenn die Ränder der Kacheln keine ebenen Kurven bilden. Die Kacheln werden nicht beliebig zusammengefügt, sondern nur gemäß der Anlege- bzw. Konstruktionsregeln der Parkettierung. Dies schränkt die Fälle ein, wie die Kanten zweier Kacheln aufeinandertreffen können. Es ist ausreichend, dafür zu sorgen, dass die in der Parkettierung vorkommenden Zusammenfügungen zweier Kacheln zu einer stetigen Oberfläche führen.

Herkömmliche Rückstrahler nach dem Stand der Technik besitzen eine asymmetrische Rückstrahlcharakteristik und erzeugen unter bestimmten Lichtbedingungen starke gerichtete Reflexionen. Die Ursache liegt in der regelmäßigen Anordnung gleichartiger Rückstrahlprismen.

Vorteilhaft ist beim erfindungsgemäßen Rückstrahler 01 vorgesehen, dass die Parkettierung eine nicht-periodische Prismenanordnung innerhalb seiner Rückstrahlfläche 10, 10 a, 10 b, 10 c umfasst, in der zumindest ein Rückstrahlprisma 20 in unterschiedlichen Orientierungen vorkommt.

Indem in der Parkettierung innerhalb der Rückstrahlfläche zumindest ein Rückstrahlprisma in unterschiedlichen Orientierungen vorkommt, wird dieser beim Stand der Technik vorherrschende und anzutreffende Nachteil behoben.

Besonders vorteilhaft ist eine Parkettierung mit lokal fünfzähliger Symmetrie, wie etwa die Penrose-Parkettierungen, oder einer höheren ungradzahligen lokalen Symmetrie. Die Rückstrahlcharakteristik weist durch eine solche Parkettierung beispielsweise eine dreißigfache Symmetrie auf, die in der praktischen Anwendung nicht mehr von einem rotationssymmetrischen Verhalten zu unterscheiden ist. Die mit einer solchen Parkettierung belegte Rückstrahlfläche 10 eines Rückstrahlers 01 selbst erscheint hierbei insgesamt weitgehend unregelmäßig, wobei jedoch durchaus formschöne, scheinbar zufällig eingebaute, beispielsweise sternförmige Strukturen entstehen. Da die Rückstrahlprismen 02, 02 a, 02 b, 02 c, 02 d, 02 e, 02 f, 02 g, 02 h, 02 i, 02 j in sehr vielen unterschiedlichen Orientierungen vorkommen, treten unerwünschte Reflexionen immer nur an wenigen Rückstrahlprismen 02, 02 a, 02 b, 02 c, 02 d, 02 e, 02 f, 02 g, 02 h, 02 i, 02 j gleichzeitig auf und werden daher nicht wie beim Stand der Technik als störend wahrgenommen.

Nicht trivial ist bei der Umsetzung, dass es für ein lückenloses Aneinanderfügen der Kacheln nicht ausreichend ist, wenn die Projektion in eine Ebene senkrecht zur Hauptachse, entsprechend in der gemeinsamen, stetigen Fläche, entlang welcher sich die Rückstrahlfläche 10 erstreckt, die gewünschte Außenkontur ergibt.

Die Kacheln sind deshalb zudem so gestaltet, dass ihre im allgemeinen dreidimensionalen Außenkonturen stetig aneinandergefügt werden können. Werden die Kacheln aus mehreren Rückstrahlprismen 02, 02 a, 02 b, 02 c, 02 d, 02 e, 02 f, 02 g, 02 h, 02 i, 02 j zusammengesetzt und wird darüber hinaus berücksichtigt, welche Aneinanderfügungen in der Parkettierung vorkommen können, so kann eine insgesamt stetige Oberfläche sichergestellt werden.

Zusammengefasst erlaubt die Erfindung, eine Fläche lückenlos mit Rückstrahlprismen 02, 02 a, 02 b, 02 c, 02 d, 02 e, 02 f, 02 g, 02 h, 02 i, 02 j zu füllen. Die Fläche wird beispielsweise bei einer Penrose-Parkettierung gefüllt durch ein nicht-periodisches Muster mit fünfzähliger Symmetrie.

Sich hierdurch ergebende Vorteile sind zumindest ein ansprechendes, innovatives Erscheinungsbild und ein richtungsunabhängiges, rotationssymmetrisches Rückstrahlverhalten.

Um die gewünschte Außenkontur einer Kachel zu erhalten, können Rückstrahlprismen 02, 02 a, 02 b, 02 c, 02 d, 02 e, 02 f, 02 g, 02 h, 02 i, 02 j mit geeigneter Außengeometrie zusammengefügt werden.

Einen weiteren Freiheitsgrad bietet die Möglichkeit, die Hauptachsen der Rückstrahlprismen 02, 02 a, 02 b, 02 c, 02 d, 02 e, 02 f, 02 g, 02 h, 02 i, 02 j gegeneinander und gegen die Hauptachse des Rückstrahlers 01 zu verkippen.

Dieses Verkippen reduziert jedoch oft die Rückstrahleffizienz, sodass nur Verkippungswinkel von wenigen Grad, beispielsweise von 10° oder weniger, gegen die Hauptrückstrahlrichtung des Rückstrahlers 01 unter Beachtung einer möglichen Lichtbrechung an der Rückstrahlervorderseite empfehlenswert sind.

Bei einem solchen Rückstrahler 01, bei dem die Hauptachsen der Rückstrahlprismen 02, 02 a, 02 b, 02 c, 02 d, 02 e, 02 f, 02 g, 02 h, 02 i, 02 j gegeneinander und gegen die Hauptachse des Rückstrahlers 01 verkippt sind, beträgt der Verkippungswinkel zwischen den Hauptachsen der Rückstrahlprismen 02, 02 a, 02 b, 02 c, 02 d, 02 e, 02 f, 02 g, 02 h, 02 i, 02 j gegeneinander und der Verkippungswinkel der Hauptachsen der Rückstrahlprismen 02, 02 a, 02 b, 02 c, 02 d, 02 e, 02 f, 02 g, 02 h, 02 i, 02 j gegen die Hauptachse des Rückstrahlers 01 daher vorzugsweise höchstens 10°, besonders bevorzugt sogar höchstens nur 5°.

Insbesondere ist es dadurch auch möglich, dass ein oder mehrere Rückstrahlprismen 02, 02 a, 02 b, 02 c, 02 d, 02 e, 02 f, 02 g, 02 h, 02 i, 02 j, aus denen eine Rückstrahlkachel 200 A, 200 B, 200 C, 200 D oder beispielsweise eine Kachel:
- in Form einer zuvor beschriebenen schmalen Raute 210, und/oder
- in Form einer zuvor beschriebenen breiten Raute 220, und/oder
- in einer zuvor beschriebenen Drachenform 230, und/oder
- in einer zuvor beschriebenen Pfeilform 240, und/oder
- in Form eines zuvor beschriebenen Quadrats 250, und/oder
- in Form einer zuvor beschriebenen Raute 260, und/oder
- in Form eines zuvor beschriebenen größeren Dreiecks 270, und/oder
- in Form eines zuvor beschriebenen kleineren Dreiecks 280 zusammengesetzt wird, sich nur zur Hälfte auf einer Kachel befinden und mit einer ihrer Symmetrieebenen am Kachelrand enden. Die zweite Hälfte der jeweiligen Rückstrahlprismen 02, 02 a, 02 b, 02 c, 02 d, 02 e, 02 f, 02 g, 02 h, 02 i, 02 j muss sich dann stets auf der angrenzenden Kachel befinden.

Beispielsweise trifft hierauf die eingangs getroffene Aussage zu, wonach die Rückstrahlprismen 02 a, 02 b, 02 c, 02 d, 02 e, 02 f, 02 g, 02 h, 02 i, 02 j einer Rückstrahlkachel 200 A, 200 B, 200 C, 200 D jeweils aus einer oder mehreren aneinander angrenzenden Prismaflächen 20 zusammengesetzt sind.

Da in einem Rückstrahler 01 die Kacheln nicht als solche abgegrenzt sichtbar sind, kann alternativ eine komplexere Kachelform gefunden werden, die nur vollständige Rückstrahlprismen 02, 02 a, 02 b, 02 c, 02 d, 02 e, 02 f, 02 g, 02 h, 02 i, 02 j enthält.

Es ist immer möglich, die unterschiedlichen Rückstrahlprismen 02, 02 a, 02 b, 02 c, 02 d, 02 e, 02 f, 02 g, 02 h, 02 i, 02 j innerhalb der ursprünglich gedachten Kacheln als einzelne Kacheln zu interpretieren. Dies ergibt dann eine aperiodische Parkettierung mit Kacheln, die jeweils nur aus einem Prisma bestehen. Ein erfindungsgemäßer Rückstrahler besteht demnach zumindest teilweise aus einer begrenzten Anzahl unterschiedlicher Rückstrahlprismen 02, 02 a, 02 b, 02 c, 02 d, 02 e, 02 f, 02 g, 02 h, 02 i, 02 j, die zumindest zum überwiegenden Teil mehrfach im Rückstrahler 01 vorkommen. Sie sind im Rückstrahler 01 so zusammengesetzt, dass sie die Rückstrahlfläche 10, 10 a, 10 b, 10 c zumindest teilweise in Form einer lückenlosen, aperiodischen Parkettierung füllen. Vorzugsweise können aus mehreren dieser Prismen Kacheln zusammengefasst werden, die jeweils mehrfach innerhalb des Rückstrahlers 01 vorkommen und entsprechend ebenfalls eine aperiodische Parkettierung bilden.

Die Verwendung einzelner Rückstrahlprismen 02, 02 a, 02 b, 02 c, 02 d, 02 e, 02 f, 02 g, 02 h, 02 i, 02 j ist insofern vorteilhaft, als dass auch bei kleinen Rückstrahlern 01 ziemlich sicher ein Großteil der Prismen mehrfach vorkommt. Bei kleinen Rückstrahlern 01 und großen Kacheln ist es aber vorstellbar, dass ein großer Teil der Kacheln am Rand des Rückstrahlers 01 abgeschnitten ist. Dann kommt eine Kachel womöglich nicht mehrfach vollständig vor. Auch ist beim fertigen Produkt das gedankliche zusammensetzen der Rückstrahlprismen 02, 02 a, 02 b, 02 c, 02 d, 02 e, 02 f, 02 g, 02 h, 02 i, 02 j zu Kacheln ein schwieriger Prozess. Wesentlich einfacher ist es dagegen, gleichartige Prismen in einem Rückstrahler 01 zu markieren und dann zu prüfen, ob das entstehende Muster aperiodisch ist. Für die Erstellung einer Rückstrahlergeometrie am Computer ist der Weg über größere Kacheln einfacher.

Dass der Rückstrahler 01 aus einer kleinen Anzahl unterschiedlicher Prismen zusammengesetzt werden kann, ist auch für die kostengünstige Herstellung der Einsätze für Spritzgusswerkzeuge, sogenannter Galvanos, entscheidend. Bei einem solchen Galvano wird eine der Rückstrahlfläche 10, 10 a, 10 b, 10 c entsprechende Fläche aus einer Vielzahl von Stiften zusammengesetzt, die jeweils drei jeweils den Prismaflächen 20 eines Rückstrahlprismas 02, 02 a, 02 b, 02 c, 02 d, 02 e, 02 f, 02 g, 02 h, 02 i, 02 j entsprechende Teilflächen besitzen. Die hierdurch entstandene, der Rückstrahlfläche 10, 10 a, 10 b, 10 c entsprechende Fläche wird anschließend galvanisch abgeformt, um den Spritzgusseinsatz zu bauen. Da nur eine begrenzte Anzahl unterschiedlicher Rückstrahlprismen 02, 02 a, 02 b, 02 c, 02 d, 02 e, 02 f, 02 g, 02 h, 02 i, 02 j in der Parkettierung verwendet wird, lassen sich die Stifte wiederverwenden. Durch neues Zusammensetzen derselben Stifte können so unterschiedliche Rückstrahler 01 hergestellt werden. Durch Versetzen der Stifte in Richtung der Stiftachse und Verdrehen der Stifte um die anderen Raumachsen lässt sich die Rückstrahlergeometrie an eine gekrümmte Fläche anpassen. Dabei muss durch den Versatz nicht nur die Kontur angepasst werden, sondern durch das Verdrehen auch die Lichtbrechung an der Rückstrahlervorderseite berücksichtigt werden (Fig. 8). Ein so hergestellter Rückstrahler 01 besitzt mehrere Rückstrahlflächen 10 a, 10 b, 10 c, die wie bei dem in Fig. 8 dargestellten Rückstrahler 01 jeweils stufenförmig zueinander versetzt und zueinander geneigt angeordnet sein können, oder die wie bei dem in Fig. 11 dargestellten Rückstrahler 01 aneinander bündig angrenzend, jedoch zueinander geneigt angeordnet sein können.

Um den Rückstrahler 01 auf eine gekrümmte Oberfläche 100 aufzubringen oder, wie in Anspruch 1 definiert, an eine gekrümmte Oberfläche 100 anzupassen, werden Kachelformen verwendet, mit denen die Parkettierung bereits eine gekrümmte Fläche oder eine schräg zur Hauptachse verlaufende Ebene aufspannt. Alternativ oder zusätzlich kann die Parkettierung leicht verzerrt sein. Des Weiteren können wie beim in Fig. 8 gezeigten Rückstrahler Stufen zwischen einzelnen Rückstrahlprismen 02, 02 a, 02 b, 02 c, 02 d, 02 e, 02 f, 02 g, 02 h, 02 i, 02 j und/oder zwischen einzelnen Rückstrahlkacheln 200 A, 200 B, 200 C, 200 D eingefügt sein, um eine Anpassung an die gekrümmte Oberfläche 100 zu ermöglichen.

Eine vorteilhafte Möglichkeit ist es auch, an ausgewählten Stellen der Parkettierung Kacheln durch besonders angepasste Kachelgeometrien zu ersetzen, die eine gekrümmte Parkettierung erzeugen. Beispielsweise kann bei einem Rückstrahler 01 vorgesehen sein, dass beispielsweise durch Grenzen 13 (Fig. 9) und/oder Ammann-Bars 11, 12, 15 (Fig. 9, Fig. 10 a), Fig. 10 b)) gebildete Linien aus Wiederholungen einer oder weniger Kacheln die Rückstrahlfläche 10, 10 a, 10 b, 10 c des Rückstrahlers 01 durchlaufen. Viele Parkettierungen können dazu so gestaltet werden, dass Linien aus Wiederholungen einer oder weniger Kacheln den Rückstrahler 01 durchlaufen. Die Kacheln dieser Linien können dann an ausgewählten Stellen durch spezielle Kacheln ersetzt werden, die einen Knick oder Bogen in der von der Parkettierung aufgespannten Fläche erzeugen. Die genannten Möglichkeiten stellen stets nur kleine Abweichungen von der zugrundeliegenden aperiodischen Parkettierung dar, so dass diese weiterhin als solche erkennbar bleibt.

Bei vielen so genannten Substitution Tilings, bei denen es sich um Parkettierungen handelt, die sich durch das Skalieren und Ersetzen der Kacheln bilden lassen, lassen sich sogenannte Ammann Bars 11, 12 definieren. Dies sind gerade Linien auf den Kacheln, die sich in der vollständigen Parkettierung stets zu durch die ganze Parkettierung laufende Geraden zusammensetzen. Die Anzahl der Richtungen, in der Ammann-Bars 11, 12, 15 existieren, entspricht der lokalen Symmetrie der Parkettierung. In einer Penrose-Parkettierung mit fünfzähliger Symmetrie lassen sich demnach Ammann-Bars 11, 12, 15 in fünf verschiedene Richtungen definieren, die jeweils um 72° gegeneinander verdreht verlaufen (Fig. 9, Fig. 10 a), Fig. 10 b)). In Richtung der Ammann-Bars 11, 12, 15 lassen sich besonders gut Versatzlinien mit einem Höhenversatz und gegebenenfalls mit einer Verkippung zwischen den Prismen in den Rückstrahler 01 einfügen. Parallel zu den Ammann-Bars 11, 12, 15 laufen oftmals Grenzen 13 zwischen den Prismen mit geringen Abweichungen gerade durch den Rückstrahler 01. Entsprechend lässt sich hier eine Stufe in den Rückstrahler 01 einfügen, die im Kunststoffspritzguss leicht zu entformen ist, weil die Kanten der Stufe nur um wenige Grad, z.B. um ±18°, von der gemeinsamen mittleren Kantenrichtung abweichen (Fig. 9).

Erfindungsgemäß folgt die Fläche der Rückstrahlprismen 02, 02 a, 02 b, 02 c, 02 d, 02 e, 02 f, 02 g, 02 h, 02 i, 02 j der Kontur der Rückstrahlervorderseite. Die Lichtbrechung an der Rückstrahlervorderseite eines gekrümmten Rückstrahlers ändert sich mit der Richtung der Oberflächennormale 14 a, 14 b, 14 c der Rückstrahlervorderseite kontinuierlich über den Rückstrahler. Die Ausrichtung der Hauptachsen der Rückstrahlprismen 02, 02 a, 02 b, 02 c, 02 d, 02 e, 02 f, 02 g, 02 h, 02 i, 02 j muss diese Lichtbrechung berücksichtigen, damit die maximale Rückstrahlwirkung der Prismen stets in Richtung der Hauptrückstrahlrichtung des gesamten Rückstrahlers erfolgt. Die dazu notwendige Verkippung der Rückstrahlprismen 02, 02 a, 02 b, 02 c, 02 d, 02 e, 02 f, 02 g, 02 h, 02 i, 02 j kann abschnittsweise erfolgen, indem die Prismen innerhalb eines Abschnitts gleich ausgerichtet sind, sich diese Ausrichtung aber von einem zum nächsten Abschnitt ändert (Fig. 8, Fig. 11). Der am Übergang zwischen zwei Abschnitten entstehende Knick (Fig. 11) in der Parkettierung verläuft bevorzugt parallel zu den Ammann-Bars 11, 12, 15. Die Änderung der Richtung der Hauptachsen der Rückstrahlprismen 02, 02 a, 02 b, 02 c, 02 d, 02 e, 02 f, 02 g, 02 h, 02 i, 02 j kann kombiniert mit einem Versatz senkrecht zur Richtung der Hauptachsen erfolgen, so dass die Fläche der Rückstrahlprismen der Kontur der Rückstrahlervorderseite folgt (Fig. 8).

Sowohl für die Verkippung der Hauptachsen als auch für den Versatz senkrecht zur Rückstrahlrichtung lassen sich Amman-Bars 11, 12, 15 verschiedener Richtungen kombinieren. Damit lässt sich die Fläche der Rückstrahlprismen 02, 02 a, 02 b, 02 c, 02 d, 02 e, 02 f, 02 g, 02 h, 02 i, 02 j auch dreidimensional gekrümmten Flächen anpassen. Dies ist beispielsweise notwendig, um einen Rückstrahler 01 in die Lichtscheibe einer Fahrzeugheckleuchte einzufügen, die oft eine dreidimensional gekrümmte Oberfläche besitzen.

Durch Änderungen der Richtung der Hauptachsen der Rückstrahlprismen 02, 02 a, 02 b, 02 c, 02 d, 02 e, 02 f, 02 g, 02 h, 02 i, 02 j und/oder durch einen Versatz der Rückstrahlprismen 02, 02 a, 02 b, 02 c, 02 d, 02 e, 02 f, 02 g, 02 h, 02 i, 02 j entstehen Versatzlinien im Rückstrahler 01, die keine Rückstrahlwirkung besitzen (Fig. 8). Diese Linien lassen sich vermeiden, wenn an entlang einer Ammann-Bar 11, 12 andersartige Prismen eingefügt werden, die zu einer Drehung der Parkettierungsebene und/oder einem Versatz der Prismen führen, ohne dass eine sichtbare Kante entsteht. Dies ist mit wenigen zusätzlichen Prismengeometrien möglich, weil die Ammann-Bars 11, 12, 15, 15 nur entlang weniger gerader Linien durch eine Kachel der Parkettierung laufen (Fig. 10 a), Fig. 10 b)). Eine Verkippung und/oder ein Versatz muss dementsprechend nur entlang dieser Linien vorgesehen werden, um sicherzustellen, dass die Parkettierung weiterhin lückenlos aneinander passt. Entsprechend können alle Prismen, durch die eine Ammann-Bar 11, 12, 15 läuft, durch Varianten der Prismen ersetzt werden, die zu einer Verkippung und/oder einem Versatz entlang dieser Linie führen, ohne dass eine Versatzkante entsteht. Da durch jede Kachel nur wenige Ammann-Bars 11, 12, 15 an festgelegten Stellen laufen, sind dazu nur wenige Prismenvarianten erforderlich. Im Beispiel der Penrose-Drachen-Pfeil-Parktettierung enthält jede Kachel nur drei Ammann-Bars 11, 12, 15 (Fig. 10 a), Fig. 10 b)), womit nur jeweils drei Varianten zum Einfügen einer Verkippung der Hauptachsen in einen Rückstrahler erforderlich sind. Das Einfügen eines Versatzes senkrecht zur Hauptachse, eventuell kombiniert mit einer Verkippung, erfordert jeweils sechs Varianten, weil auch die Einbaurichtung entscheidend ist.

Viele Lichtscheiben in Fahrzeugheckleuchten sind nicht nur dreidimensional gekrümmt, sondern ihre Oberflächennormale im Bereich des Rückstrahlers 01 steht auch im Mittel schräg zur Richtung der Hauptrückstrahlrichtung. In solchen Fällen ist es sinnvoll, die Parkettierung mit Rückstrahlprismen 02, 02 a, 02 b, 02 c, 02 d, 02 e, 02 f, 02 g, 02 h, 02 i, 02 j so zu gestalten, dass die Parkettierung ebenfalls in einer Ebene verläuft, die nicht senkrecht zur Hauptachse der Prismen steht (Fig. 11). In einer Parkettierung mit beispielsweise lokal fünfzähliger Symmetrie kann jede Kachel mindestens in fünf verschiedenen Orientierungen vorkommen. Um eine geneigte Parkettierungsebene bei gleich ausgerichteten Hauptachsen der Rückstrahlprismen 02, 02 a, 02 b, 02 c, 02 d, 02 e, 02 f, 02 g, 02 h, 02 i, 02 j zu erhalten, muss für jede in der Parkettierung vorkommende Prismengeometrie jeweils für jede mögliche Orientierung eine neue Variante dieser Prismengeometrie erstellt werden, die die gewünschte Neigung der Prismenebene berücksichtigt. Ersetzt man dann in einer Parkettierung mit senkrecht zur Hauptrückstrahlrichtung stehenden Hauptachsen der Rückstrahlprismen 02, 02 a, 02 b, 02 c, 02 d, 02 e, 02 f, 02 g, 02 h, 02 i, 02 j die Prismen jeweils durch die passende neue Variante dieser Prismengeometrie, erhält man eine insgesamt geneigte Prismenebene. Trotz der zahlreichen zusätzlichen Prismenvarianten, ist die Anzahl der unterschiedlichen Prismen begrenzt, wodurch die entsprechenden Stifte für die Galvano-Herstellung für unterschiedliche Rückstrahlergeometrien wiederverwendet werden können.

In der Beschreibung wurde stets auf eine kontinuierliche Oberfläche wertgelegt, die von den Rückstrahlprismen 02, 02 a, 02 b, 02 c, 02 d, 02 e, 02 f, 02 g, 02 h, 02 i, 02 j gebildet wird. Wichtig ist an dieser Stelle hervorzuheben, dass einzelne Stufen in der Parkettierung genutzt werden können, beispielsweise zur Anpassung an gewölbte Oberflächen 100 (Fig. 8, Fig. 11) und/oder zur Vergrößerung der Abstrahlung in von einer Hauptrückstrahlrichtung abweichenden Richtungen. Auch in der in Fig. 5 dargestellte Parkettierung enthält eine der Rückstrahlprismen-Geometrien an einer Ecke eine sehr kleine steile Flanke 21 (Fig. 7). Ebenso sind bei gebogenen Rückstrahlern, wie beispielsweise in der Lichtscheibe einer Heckleuchte, meist Stufen zwischen Prismen und/oder Kacheln notwendig.

Es ist ohne weiteres möglich, einen Rückstrahlerbereich mit einer erfindungsgemäßen Parkettierung zu erstellen und diesen Bereich dann mehrfach zu kopieren, so dass der Rückstrahler 01 nur bereichsweise aperiodisch ist, sich dieser Bereich aber mehrfach periodisch wiederholt.

Zudem ist es vorstellbar, in eine aperiodische Parkettierung gezielt Fehler einzubauen. Beispielsweise kann ein Bereich aus der Parkettierung herausgenommen und mit andersartigen Kacheln gefüllt werden. Vorstellbar ist auch eine Füllung des Bereichs mit den gleichen Kacheln, jedoch so, dass dort die der Parkettierung zugrunde liegenden Anlegeregeln verletzt werden. Dieser Bereich kann anschließend als Beleg herangezogen werden, dass es sich eben nicht um eine flächenfüllende aperiodische Parkettierung handelt. Zudem wird es mit solchen abweichenden Bereichen immer schwieriger im fertigen Rückstrahler die zugrundeliegende Parkettierung zu erkennen.

Natürlich ist es vorstellbar, dass jedes Rückstrahlprisma 02, 02 a, 02 b, 02 c, 02 d, 02 e, 02 f, 02 g, 02 h, 02 i, 02 j einzeln gestaltet oder per Computerprogramm tatsächlich ein Zufallsmuster erzeugt wird, dass keine regelmäßige Parkettierung darstellt. Damit einen effizienten und lückenlosen Rückstrahler zu erzeugen, wäre herausfordernd aber vermutlich nicht unmöglich. Dieser hätte auf jeden Fall nur sehr wenige gleiche Rückstrahlprismen 02, 02 a, 02 b, 02 c, 02 d, 02 e, 02 f, 02 g, 02 h, 02 i, 02 j. Für die Anwendung ist dies jedoch aufgrund hoher Produktionskosten eher uninteressant.

Der Rückstrahler 01 kann zusätzlich einzelne oder eine Kombination mehrerer in der voranstehenden Beschreibung und/oder in den nachfolgenden Ansprüchen erwähnte Merkmale aufweisen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Rückstrahler
- 02: Rückstrahlprisma
- 02 a: Rückstrahlprisma
- 02 b: Rückstrahlprisma
- 02 c: Rückstrahlprisma
- 02 d: Rückstrahlprisma
- 02 e: Rückstrahlprisma
- 02 f: Rückstrahlprisma
- 02 g: Rückstrahlprisma
- 02 h: Rückstrahlprisma
- 02 i: Rückstrahlprisma
- 02 j: Rückstrahlprisma

- 10: Rückstrahlfläche
- 10 a: Rückstrahlfläche
- 10 b: Rückstrahlfläche
- 10 c: Rückstrahlfläche
- 11: Ammann-Bar
- 12: Ammann-Bar
- 13: Grenze
- 14 a: Oberflächennormale
- 14 b: Oberflächennormale
- 14 c: Oberflächennormale
- 15: Ammann-Bar

- 20: Prismafläche
- 21: Flanke

- 100: Oberfläche

- 200 A: Rückstrahlkachel
- 200 B: Rückstrahlkachel
- 200 C: Rückstrahlkachel
- 200 D: Rückstrahlkachel
- 210: schmale Raute
- 220: breite Raute
- 230: Drachenform
- 240: Pfeilform
- 250: Quadrat
- 260: Raute
- 270: Dreieck (größeres)
- 280: Dreieck (kleineres)

## Patentansprüche

1. Rückstrahler (01), mit mindestens einer Rückstrahlfläche (10, 10 a, 10 b, 10 c), umfassend mehrere Rückstrahlprismen (02, 02 a, 02 b, 02 c, 02 d, 02 e, 02 f, 02 g, 02 h, 02 i, 02 j), die jeweils aus mehreren aneinander angrenzenden Prismaflächen (20) zusammengesetzt sind, wobei mehrere Rückstrahlprismen (02, 02 a, 02 b, 02 c, 02 d, 02 e, 02 f, 02 g, 02 h, 02 i, 02 j) mit verschiedenen Geometrien ihrer Prismaflächen (20) zu Rückstrahlkacheln (200 A, 200 B, 200 C, 200 D, 210, 220, 230, 240, 250, 260, 270, 280) zusammengesetzt sind, die eine lückenlose aperiodische Parkettierung der Rückstrahlfläche (10, 10 a, 10 b, 10 c) ermöglichen, und wobei die Rückstrahlkacheln (200 A, 200 B, 200 C, 200 D, 210, 220, 230, 240, 250, 260, 270, 280) jeweils einen Rand aufweisen, der innerhalb einer gemeinsamen, stetigen, Fläche liegt, entlang welcher sich die Rückstrahlfläche (10, 10 a, 10 b, 10 c) erstreckt, wobei die Fläche der Rückstrahlprismen der Kontur einer gekrümmten Rückstrahlervorderseite folgt, und wobei die gemeinsame, stetige, Fläche gekrümmt ist oder eine schräg zur Hauptachse des Rückstrahlers verlaufende Ebene aufspannt.

2. Rückstrahler nach Anspruch 1, wobei die lückenlose Parkettierung in Verbindung mit einer oder mehreren identischen Rückstrahlkacheln (200 A, 200 B, 200 C, 200 D, 210, 220, 230, 240, 250, 260, 270, 280) erhalten wird.

3. Rückstrahler nach Anspruch 1 oder 2, wobei die lückenlose Parkettierung in Verbindung mit einem Rückstrahlprisma (02, 02 a, 02 b, 02 c, 02 d, 02 e, 02 f, 02 g, 02 h, 02 i, 02 j) oder mit mehreren Rückstrahlprismen (02, 02 a, 02 b, 02 c, 02 d, 02 e, 02 f, 02 g, 02 h, 02 i, 02 j) erhalten wird, bei dem oder bei denen es sich um eines oder mehrere selbe Rückstrahlprismen (02, 02 a, 02 b, 02 c, 02 d, 02 e, 02 f, 02 g, 02 h, 02 i, 02 j) handelt, wie bei denen, die zu Rückstrahlkacheln (200 A, 200 B, 200 C, 200 D, 210, 220, 230, 240, 250, 260, 270, 280) zusammengesetzt sind, und/oder bei dem oder bei denen es sich um eines oder mehrere weitere Rückstrahlprismen (02, 02 a, 02 b, 02 c, 02 d, 02 e, 02 f, 02 g, 02 h, 02 i, 02 j) handelt, bei dem oder bei denen sich die Geometrien deren Prismaflächen von denen, die zu Rückstrahlkacheln (200 A, 200 B, 200 C, 200 D, 210, 220, 230, 240, 250, 260, 270, 280) zusammengesetzt sind, unterscheiden.

4. Rückstrahler nach Anspruch 1, 2 oder 3, wobei die lückenlose Parkettierung in Verbindung mit einer oder mehreren von den Rückstrahlkacheln (200 A, 200 B, 200 C, 200 D, 210, 220, 230, 240, 250, 260, 270, 280) verschiedenen, anderen Rückstrahlkacheln (200 A, 200 B, 200 C, 200 D, 210, 220, 230, 240, 250, 260, 270, 280) erhalten wird, welche eine oder mehrere anderen Rückstrahlkacheln (200 A, 200 B, 200 C, 200 D, 210, 220, 230, 240, 250, 260, 270, 280) aus einer anderen Zahl und/oder Orientierung der selben Rückstrahlprismen (02, 02 a, 02 b, 02 c, 02 d, 02 e, 02 f, 02 g, 02 h, 02 i, 02 j) zusammengesetzt sind.

5. Rückstrahler nach einem der Ansprüche 1 bis 4, wobei die lückenlose Parkettierung in Verbindung mit einer oder mehreren von den Rückstrahlkacheln (200 A, 200 B, 200 C, 200 D, 210, 220, 230, 240, 250, 260, 270, 280) verschiedenen weiteren Rückstrahlkacheln (200 A, 200 B, 200 C, 200 D, 210, 220, 230, 240, 250, 260, 270, 280) erhalten wird, welche eine oder mehrere weiteren Rückstrahlkacheln (200 A, 200 B, 200 C, 200 D, 210, 220, 230, 240, 250, 260, 270, 280) aus einem oder mehreren weiteren Rückstrahlprismen (02, 02 a, 02 b, 02 c, 02 d, 02 e, 02 f, 02 g, 02 h, 02 i, 02 j) zusammengesetzt sind.

6. Rückstrahler nach einem der voranstehenden Ansprüche, wobei es sich bei der Parkettierung in der Draufsicht um eine aus der Mathematik bekannte Parkettierung handelt, wobei die Umrisse der verschiedenen Rückstrahlprismen (02, 02 a, 02 b, 02 c, 02 d, 02 e, 02 f, 02 g, 02 h, 02 i, 02 j) und/oder Rückstrahlkacheln (200 A, 200 B, 200 C, 200 D, 210, 220, 230, 240, 250, 260, 270, 280) in einer Draufsicht auf die Rückstrahlfläche die Geometrien innerhalb der aus der Mathematik bekannten Parkettierungen einnehmen.

7. Rückstrahler nach einem der voranstehenden Ansprüche, wobei die lückenlose Parkettierung eine Penrose-Rauten-Parkettierung umfasst.

8. Rückstrahler nach einem der voranstehenden Ansprüche, wobei von den Rückstrahlkacheln (200 A, 200 B, 200 C, 200 D, 210, 220, 230, 240, 250, 260, 270, 280) mindestens eine mindestens zweimal zumindest teilweise im Rückstrahler vorkommt.

9. Rückstrahler nach einem der voranstehenden Ansprüche, wobei zumindest ein Rückstrahlprisma (02, 02 a, 02 b, 02 c, 02 d, 02 e, 02 f, 02 g, 02 h, 02 i, 02 j) in unterschiedlichen Orientierungen vorkommt.

10. Rückstrahler nach einem der voranstehenden Ansprüche, wobei die Hauptachsen der Rückstrahlprismen (02, 02 a, 02 b, 02 c, 02 d, 02 e, 02 f, 02 g, 02 h, 02 i, 02 j) gegeneinander und gegen die Hauptachse des Rückstrahlers (01) verkippt sind.

11. Rückstrahler nach einem der voranstehenden Ansprüche, wobei Stufen zwischen einzelnen Rückstrahlprismen (02, 02 a, 02 b, 02 c, 02 d, 02 e, 02 f, 02 g, 02 h, 02 i, 02 j) und/oder Rückstrahlkacheln (200 A, 200 B, 200 C, 200 D, 210, 220, 230, 240, 250, 260, 270, 280) eingefügt sind.

12. Rückstrahler nach einem der voranstehenden Ansprüche, wobei Amman-Bars (11, 12, 15) oder parallel zu Amman-Bars (11, 12, 15) verlaufende Grenzen (13) die Rückstrahlfläche (10, 10 a, 10 b, 10 c) durchlaufen.

## Claims

1. A retroreflector (01), with at least one retroreflective surface (10, 10 a, 10 b, 10 c), comprising a plurality of retroreflective prisms (02, 02 a, 02 b, 02 c, 02 d, 02 e, 02 f, 02 g, 02 h, 02 i, 02 j), which are each assembled from a plurality of prism surfaces (20) adjacent to each other, wherein a plurality of retroreflective prisms (02, 02 a, 02 b, 02 c, 02 d, 02 e, 02 f, 02 g, 02 h, 02 i, 02 j) with different geometries of their prism surfaces (20) are assembled to form retroreflective tiles (200 A, 200 B, 200 C, 200 D, 210, 220, 230, 240, 250, 260, 270, 280), which enable a gapless aperiodic tiling of the retroreflective surface (10, 10 a, 10 b, 10 c), and wherein the retroreflective tiles (200 A, 200 B, 200 C, 200 D, 210, 220, 230, 240, 250, 260, 270, 280) each have an edge, which lies within a common, continuous surface along which the retroreflective surface (10, 10 a, 10 b, 10 c) extends, wherein the surface of the retroreflective prisms follows the contour of a curved front side of the retroreflector, and wherein the common continuous surface is curved or spans a plane running obliquely to the major axis of the retroreflector.

2. The retroreflector according to claim 1, wherein the gapless tiling is obtained in connection with one or more identical retroreflective tiles (200 A, 200 B, 200 C, 200 D, 210, 220, 230, 240, 250, 260, 270, 280).

3. The retroreflector according to claim 1 or 2, wherein the gapless tiling is obtained in connection with one retroreflective prism (02, 02 a, 02 b, 02 c, 02 d, 02 e, 02 f, 02 g, 02 h, 02 i, 02 j) or with a plurality of retroreflective prisms (02, 02 a, 02 b, 02 c, 02 d, 02 e, 02 f, 02 g, 02 h, 02 i, 02 j), which is or are one or more of the same retroreflective prisms (02, 02 a, 02 b, 02 c, 02 d, 02 e, 02 f, 02 g, 02 h, 02 i, 02 j) as those assembled to form retroreflective tiles (200 A, 200 B, 200 C, 200 D, 210, 220, 230, 240, 250, 260, 270, 280), and/or which is or are one or more further retroreflective prisms (02, 02 a, 02 b, 02 c, 02 d, 02 e, 02 f, 02 g, 02 h, 02 i, 02 j), in which the geometries of the prism surfaces differ from those assembled to form retroreflective tiles (200 A, 200 B, 200 C, 200 D, 210, 220, 230, 240, 250, 260, 270, 280).

4. The retroreflector according to claim 1, 2, or 3, wherein the gapless tiling is obtained in connection with one or more other retroreflective tiles (200 A, 200 B, 200 C, 200 D, 210, 220, 230, 240, 250, 260, 270, 280) that are different from the retroreflective tiles (200 A, 200 B, 200 C, 200 D, 210, 220, 230, 240, 250, 260, 270, 280), which one or more other retroreflective tiles (200 A, 200 B, 200 C, 200 D, 210, 220, 230, 240, 250, 260, 270, 280) are assembled from a different number and/or orientation of the same retroreflective prisms (02, 02 a, 02 b, 02 c, 02 d, 02 e, 02 f, 02 g, 02 h, 02 i, 02 j).

5. The retroreflector according to one of the claims 1 to 4, wherein the gapless tiling is obtained in connection with one or more further retroreflective tiles (200 A, 200 B, 200 C, 200 D, 210, 220, 230, 240, 250, 260, 270, 280) that are different from the retroreflective tiles (200 A, 200 B, 200 C, 200 D, 210, 220, 230, 240, 250, 260, 270, 280), which one or more further retroreflective tiles (200 A, 200 B, 200 C, 200 D, 210, 220, 230, 240, 250, 260, 270, 280) are assembled from one or more further retroreflective prisms (02, 02 a, 02 b, 02 c, 02 d, 02 e, 02 f, 02 g, 02 h, 02 i, 02 j).

6. The retroreflector according to one of the previous claims, wherein the tiling in the top view is a tiling as known from mathematics, wherein the outlines of the various retroreflective prisms (02, 02 a, 02 b, 02 c, 02 d, 02 e, 02 f, 02 g, 02 h, 02 i, 02 j) and/or of the various retroreflective tiles (200 A, 200 B, 200 C, 200 D, 210, 220, 230, 240, 250, 260, 270, 280) in a top view of the retroreflective surface assume the geometries within the tilings as known from mathematics.

7. The retroreflector according to one of the previous claims, wherein the gapless tiling comprises a Penrose rhombus tiling.

8. The retroreflector according to one of the previous claims, wherein at least one of the retroreflective tiles (200 A, 200 B, 200 C, 200 D, 210, 220, 230, 240, 250, 260, 270, 280) occurs at least twice, at least partially, in the retroreflector.

9. The retroreflector according to one of the previous claims, wherein at least one retroreflective prism (02, 02 a, 02 b, 02 c, 02 d, 02 e, 02 f, 02 g, 02 h, 02 i, 02 j) occurs in different orientations.

10. The retroreflector according to one of the previous claims, wherein the major axes of the retroreflective prisms (02, 02 a, 02 b, 02 c, 02 d, 02 e, 02 f, 02 g, 02 h, 02 i, 02 j) are tilted relative to each other and relative to the major axis of the retroreflector (01).

11. The retroreflector according to one of the previous claims, wherein steps are inserted between individual retroreflective prisms (02, 02 a, 02 b, 02 c, 02 d, 02 e, 02 f, 02 g, 02 h, 02 i, 02 j) and/or between individual retroreflective tiles (200 A, 200 B, 200 C, 200 D, 210, 220, 230, 240, 250, 260, 270, 280).

12. The retroreflector according to one of the previous claims, wherein Ammann bars (11, 12, 15) or boundaries (13) running parallel to Ammann bars (11, 12, 15) pass through the retroreflective surface (10, 10 a, 10 b, 10 c).

## Revendications

1. Catadioptre (01) doté d'au moins une surface catadioptrique (10, 10 a, 10 b, 10 c), comprenant plusieurs prismes catadioptriques (02, 02 a, 02 b, 02 c, 02 d, 02 e, 02 f, 02 g, 02 h, 02 i, 02 j) qui sont chacun composés de plusieurs surfaces prismatiques (20) contiguës l'une à l'autre, plusieurs prismes catadioptriques (02, 02 a, 02 b, 02 c, 02 d, 02 e, 02 f, 02 g, 02 h, 02 i, 02 j) ayant des géométries différentes de leurs surfaces prismatiques (20) étant assemblés pour former des tuiles catadioptriques (200 A, 200 B, 200 C, 200 D, 210, 220, 230, 240, 250, 260, 270, 280) qui permettent un pavage apériodique sans trou de la surface catadioptrique (10, 10 a, 10 b, 10 c), et lesdites tuiles catadioptriques (200 A, 200 B, 200 C, 200 D, 210, 220, 230, 240, 250, 260, 270, 280) présentant chacune un bord qui se trouve à l'intérieur d'une surface commune continue le long de laquelle s'étend la surface catadioptrique (10, 10 a, 10 b, 10 c), ladite surface des prismes catadioptriques suivant le contour d'une face avant catadioptrique incurvée, et ladite surface commune continue étant incurvée ou définissant un plan incliné par rapport à l'axe principal du catadioptre.

2. Catadioptre selon la revendication 1, le pavage sans trou étant obtenu en combinaison avec une ou plusieurs tuiles identiques (200 A, 200 B, 200 C, 200 D, 210, 220, 230, 240, 250, 260, 270, 280).

3. Catadioptre selon la revendication 1 ou 2, le pavage sans trou étant obtenu en combinaison avec un prisme catadioptrique (02, 02 a, 02 b, 02 c, 02 d, 02 e, 02 f, 02 g, 02 h, 02 i, 02 j) ou avec plusieurs prismes catadioptriques (02, 02 a, 02 b, 02 c, 02 d, 02 e, 02 f, 02 g, 02 h, 02 i, 02 j) pour lequel ou lesquels il s'agit d'un ou de plusieurs prismes catadioptriques identiques (02, 02 a, 02 b, 02 c, 02 d, 02 e, 02 f, 02 g, 02 h, 02 i, 02 j) à ceux qui sont assemblés pour former des tuiles catadioptriques (200 A, 200 B, 200 C, 200 D, 210, 220, 230, 240, 250, 260, 270, 280), et/ou pour lequel ou lesquels il s'agit d'un autre ou de plusieurs autres prismes catadioptriques (02, 02 a, 02 b, 02 c, 02 d, 02 e, 02 f, 02 g, 02 h, 02 i, 02 j) pour lequel ou pour lesquels les géométries de leurs surfaces prismatiques diffèrent de ceux qui sont assemblés pour former des tuiles catadioptriques (200 A, 200 B, 200 C, 200 D, 210, 220, 230, 240, 250, 260, 270, 280).

4. Catadioptre selon l'une quelconque des revendications 1, 2 ou 3, le pavage sans trou étant obtenu en combinaison avec une ou plusieurs autres tuiles catadioptriques (200 A, 200 B, 200 C, 200 D, 210, 220, 230, 240, 250, 260, 270, 280) qui diffèrent des tuiles catadioptriques (200 A, 200 B, 200 C, 200 D, 210, 220, 230, 240, 250, 260, 270, 280), lesdites une ou plusieurs autres tuiles catadioptriques (200 A, 200 B, 200 C, 200 D, 210, 220, 230, 240, 250, 260, 270, 280) étant composées d'un autre nombre et/ou d'une autre orientation des mêmes prismes catadioptriques (02, 02 a, 02 b, 02 c, 02 d, 02 e, 02 f, 02 g, 02 h, 02 i, 02 j).

5. Catadioptre selon l'une quelconque des revendications 1 à 4, le pavage sans trou étant obtenu en combinaison avec une ou plusieurs autres tuiles catadioptriques (200 A, 200 B, 200 C, 200 D, 210, 220, 230, 240, 250, 260, 270, 280) qui diffèrent des tuiles catadioptriques (200 A, 200 B, 200 C, 200 D, 210, 220, 230, 240, 250, 260, 270, 280), lesdites une ou plusieurs autres tuiles catadioptriques (200 A, 200 B, 200 C, 200 D, 210, 220, 230, 240, 250, 260, 270, 280) étant composées d'un ou de plusieurs autres prismes catadioptriques (02, 02 a, 02 b, 02 c, 02 d, 02 e, 02 f, 02 g, 02 h, 02 i, 02 j).

6. Catadioptre selon l'une quelconque des revendications précédentes, le pavage en vue de dessus étant un pavage connu en mathématiques, les contours des différents prismes catadioptriques (02, 02 a, 02 b, 02 c, 02 d, 02 e, 02 f, 02 g, 02 h, 02 i, 02 j) et/ou tuiles catadioptriques (200 A, 200 B, 200 C, 200 D, 210, 220, 230, 240, 250, 260, 270, 280) occupant, dans une vue de dessus de la surface catadioptrique, les géométries à l'intérieur des pavages connus en mathématiques.

7. Catadioptre selon l'une quelconque des revendications précédentes, le pavage sans trou comprenant un pavage en losange de Penrose.

8. Catadioptre selon l'une quelconque des revendications précédentes, au moins une des tuiles catadioptriques (200 A, 200 B, 200 C, 200 D, 210, 220, 230, 240, 250, 260, 270, 280) étant présente au moins deux fois au moins partiellement dans le catadioptre.

9. Catadioptre selon l'une quelconque des revendications précédentes, au moins un prisme catadioptrique (02, 02 a, 02 b, 02 c, 02 d, 02 e, 02 f, 02 g, 02 h, 02 i, 02 j) étant présent dans des orientations différentes.

10. Catadioptre selon l'une quelconque des revendications précédentes, les axes principaux des prismes catadioptriques (02, 02 a, 02 b, 02 c, 02 d, 02 e, 02 f, 02 g, 02 h, 02 i, 02 j) étant inclinés les uns contre les autres et contre l'axe principal du catadioptre (01).

11. Catadioptre selon l'une quelconque des revendications précédentes, des niveaux étant ajoutés entre certains prismes catadioptriques (02, 02 a, 02 b, 02 c, 02 d, 02 e, 02 f, 02 g, 02 h, 02 i, 02 j) et/ou tuiles catadioptriques (200 A, 200 B, 200 C, 200 D, 210, 220, 230, 240, 250, 260, 270, 280).

12. Catadioptre selon l'une quelconque des revendications précédentes, dans lequel des barres d'Ammann (11, 12, 15) ou des limites (13) s'étendant parallèlement aux barres d'Ammann (11, 12, 15) traversent la surface catadioptrique (10, 10 a, 10 b, 10 c).
